(19) Europäisches Patentamt
European Patent Office
Office européen des brevets

(11) EP 4 715 913 A1

(12) **EUROPEAN PATENT APPLICATION**

(43) Date of publication:
**25.03.2026 Bulletin 2026/13**

(21) Application number: **25202121.7**

(22) Date of filing: **15.09.2025**

(51) International Patent Classification (IPC):
***H01M 8/04186** (2016.01)* ***H01M 8/18** (2006.01)*
***H01M 12/08** (2006.01)*

(52) Cooperative Patent Classification (CPC):
**H01M 8/188; H01M 8/04186; H01M 12/08**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **13.09.2024 GB 202413546**

(71) Applicants:
- **Services Pétroliers Schlumberger**
  **75007 Paris (FR)**
  Designated Contracting States:
  **FR**
- **Schlumberger Technology B.V.**
  **2514 JG The Hague (NL)**
  Designated Contracting States:
  **AL AT BE BG CH CY CZ DE DK EE ES FI GB GR HR HU IE IS IT LI LT LU LV MC ME MK MT NL NO PL PT RO RS SE SI SK SM TR**

(72) Inventors:
- **COLBOURNE, Adam**
  **Cambridge, CB3 0EL (GB)**
- **GARCIA, Javier Rubio**
  **Cambridge, CB3 0EL (GB)**
- **CLARKE, Andrew**
  **Cambridge, CB3 0EL (GB)**

(74) Representative: **Schlumberger Intellectual Property Department**
**Parkstraat 83**
**2514 JG Den Haag (NL)**

(54) **ADDITIVES FOR ELECTROCHEMICAL FLOW REACTORS**

(57) An electrochemical reactor, which may be a half-cell of a rechargeable battery, contains a liquid electrolyte which is pumped through the half-cell and has an electrochemical system in which a solid is deposited at an electrode while electric current is flowing. The liquid contains a high molecular weight polymer or a viscoelastic surfactant enabling elastic turbulence to occur and the half-cell is configured to compel through flow to make changes in direction, so that elastic turbulence occurs, enhancing mass transport through the liquid and reducing overpotential at the electrode, which enhances uniformity of deposited solid and inhibits parasitic reactions.

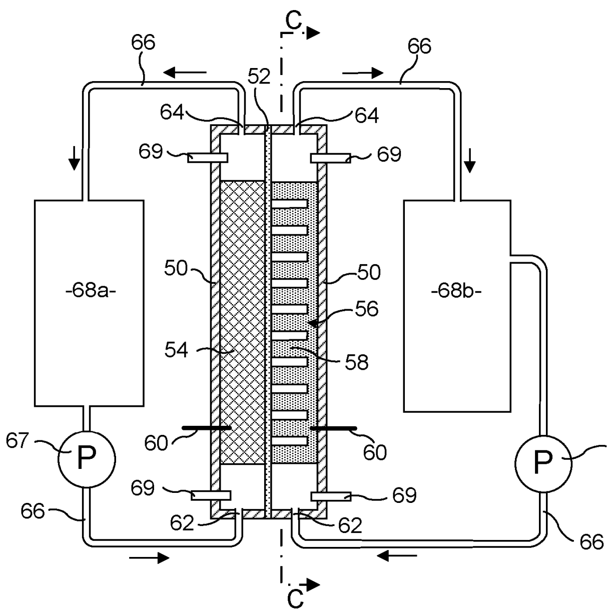


Fig 8

EP 4 715 913 A1

## Description

### FIELD

This disclosure relates to flowing electrochemical cells (FECs) in which the electrochemical reaction leads to deposition of a solid phase at an electrode. The electrochemical cell may for instance be a rechargeable flow battery for storing energy.

### BACKGROUND

Flowing electrochemical cells are used in various categories of equipment, including redox flow batteries. In a number of battery types, the two half-cells are separated by a membrane which keeps the liquids (often referred to as electrolytes) of the two half-cells from mixing together but does allow passage of ions which are required to cross from one half-cell to the other. During charge and discharge, in each half-cell, a liquid containing one or more species which undergo electrochemical reaction is pumped through the half-cell from an associated storage vessel and after passing through the half-cell, is either discharged to another storage vessel or circulated back to the vessel it came from.

Some flowing electrochemical cells bring about a reaction in which a solute in the electrolyte is converted to a solid which is deposited from solution at the electrode. This may be deposition of a metal at a negative electrode or may be deposition of a metal compound, such as an oxide or hydroxide, at a positive electrode. Deposition of a metal or metal alloy solid phase in an electrochemical half-cell can be part of a process for extraction of metals from ores (electroextraction or electrowinning) or a process for purification of metals by electrolysis (electrorefining). It can also be used in a preconcentration technique for trace analyses or be used as a process for the removal of metal ions from wastewater. If the deposition is reversible, the deposition and dissolution can be employed for charging and discharging a secondary battery. Electrochemical deposition and dissolution of metal oxides can also be employed in a secondary battery.

A flowing electrochemical half-cell is an electrochemical reactor in which a liquid containing an electroactive chemical species is made to flow past or through an electrode material. At the electrode, an electrochemical reaction occurs either spontaneously, or due to an externally applied potential that results in the transfer of one or more electrons from the electrode to the electroactive chemical species, or vice versa. When the electrochemical reaction in a half-cell results in conversion of a chemical species from a solute to a solid, the electroactive species in solution must migrate to the electrode surface in such a way as to enable the transfer of electrons and typically binds or associates with the surface. The amount of electric current at the electrode is dependent on the rate at which electroactive chemical species migrate to, or from the electrode surface.

Reactive species are drawn towards an electrode by the electrical potential at the electrode. The need to draw species to an electrode leads to so-called overpotential, where the potential at the electrode is greater than required to bring about the electrochemical reaction itself. The overpotential is acting to enhance the transport of reactive species to the surface and in this way increase the electric current flow. This consumes significant electrical power in mass transport within the liquid electrolyte, so that mass-transport overpotential is one of the largest sources of inefficiency in an electrochemical flow-cell.

Overpotential can also promote unwanted chemical reactions, so-called parasitic reactions, in particular when the electrochemical reaction involves deposition of a solid at a surface. In general, the electrodeposition of metals and metal alloys occurs at low potential at a negative electrode and if water is used as a solvent in the electrolyte, the hydrogen evolution reaction (HER) is an unwanted parasitic reaction. Likewise, the electrodeposition of metal oxides and mixed metal oxides occurs at high potential at a positive electrode and, if water is used a solvent, the oxygen evolution reaction (OER) is a parasitic reaction at the positive electrode.

Not only is a parasitic reaction a waste of electrical power, if it leads to formation of a gas at an electrode, interfacial tension causes very small bubbles to adhere to the solid surface. Coalescence of adjacent bubbles then makes the bubbles grow larger until they reach a size at which their buoyancy overcomes the adhesion to the solid surface. While bubbles are adhering to the solid surface, they are masking an area of that surface, so that it is no longer in contact with the electrolyte and is unavailable for the electrochemical reaction. This in turn affects uniformity of deposition at the electrode.

It is desirable to have an electrode of high surface area to maximize the rate at which reactions can occur for a given geometrical electrode area (i.e. the area within an outline of the electrode). However, as the surface area of an electrode is increased for a constant geometrical area, the permeability of the electrode typically decreases, causing a higher pressure-drop across the electrode and requiring more energy to be consumed for liquid circulation. There has to be a compromise between the conflicting requirements of high surface area and low pressure drop as the liquid flows over or through the electrode.

A considerable body of work exists in the creation of structured carbon electrodes for FECs. Commonly applied high-surface area materials include felts, cloths and papers of polymer (synthetic and natural) fibres. These structures are variously woven, precipitated from solution, electro-spun or otherwise made into a porous matrix with a high surface area,

before being converted primarily to carbon through "carbonization" in which the majority of non-carbon elements present in an organic material (e.g. H, O and N) are removed, typically at high temperatures under a non-reactive atmosphere.

Designs which use a high surface area porous material can be classified as either "flow through" type in which there is an inlet to the porous material in one place and an outlet from it in another place or "flow-past" type in which the liquid flows across an outer surface of a body of porous material (which may be a thin body) and at least some of the liquid flow diffuses into the porous matrix. A flow-past design may have the advantage of a relatively low resistance to flow, with a largely even distribution of liquid when it is delivered to the porous electrode. However, this comes at the cost of relying on diffusive transport in the direction perpendicular to the channel, and within the porous electrode to facilitate the movement of electroactive species from the channel, to and from the electrode. Electrodes which are entirely flow-through or flow-past represent extremes. There are many flow field designs which are in between.

## SUMMARY OF THE DISCLOSURE

This summary is provided to introduce concepts that will be further elaborated and described below in the detailed description. This summary is not intended to identify key or essential features of the claimed subject matter, nor is it intended to be used as an aid in limiting the scope of the claimed subject matter.

This disclosure uses the phenomenon of elastic turbulence which was discovered during the latter part of the twentieth century. It occurs at a flow rate where a Newtonian liquid such as pure water would be in a state of laminar flow.

In a first aspect, this disclosure provides a system comprising:

an electrochemical half-cell which comprises an electrode, and a liquid containing a dissolved reactive species able to undergo an electrochemical reaction at the electrode where the reaction converts the dissolved constituent to a solid which deposits on the electrode; structure defining a liquid flow path carrying flow of the liquid into contact with the electrode, and at least one pump for propelling the liquid along the flow path, wherein:
the liquid contains a solute enabling the liquid to display elastic turbulence, and
the flow path to or at the electrode is configured to compel changes in the direction of liquid flow, to cause elastic turbulence within flow of the liquid in contact with the electrode.

The system may be a rechargeable battery system with a second half-cell which comprises a second electrode, and a liquid containing a second dissolved reactive species which is able to undergo an electrochemical reaction at the second electrode; structure defining a liquid flow path carrying flow of the liquid into contact with the second electrode, and at least one pump configured for propelling the liquid along the flow path into contact with the second electrode. This liquid may also contain a solute enabling the liquid to display elastic turbulence, and the flow path to or at the second electrode may be configured to compel changes in the direction of liquid flow, to cause elastic turbulence within flow of the liquid in contact with the second electrode. A rechargeable battery system may be a metal-air battery system with a second half-cell which converts water to oxygen while charging and reduces atmospheric oxygen to water during discharge.

Another aspect of this disclosure provides a method of operating a flowing electrochemical half-cell with an electrode in contact with a flow path for a liquid containing a dissolved reactive species which is able to undergo electrochemical reaction at the electrode converting the dissolved reactive species to a solid which deposits on the electrode, wherein:

the liquid contains a solute enabling the liquid to display elastic turbulence,
the flow path in contact with the electrode compels changes in the direction of liquid flow, and
the method comprises pumping the liquid along the flow path with the liquid in a condition of elastic turbulence while it is in contact with the electrode.

Elastic turbulence enhances the transport of the reactive constituent(s) of the liquid to the electrode and may also enhance transport of produced species from the electrode. This improvement of mass transport can increase the electrical current density (current per unit area) at the electrode and/or reduce overpotential which is required to bring about the transport of reactive species to the electrode surface at a particular rate. The enhanced transport can arise in two ways. Elastic turbulence can transport reactive species to the surface of an electrode and also take reaction product away from the electrode surface more rapidly than by diffusion through the liquid. That is particularly relevant when the liquid is in a state of elastic turbulence within a porous electrode. Secondly, in a flow-by electrode design, elastic turbulence in a channel adjoining a porous electrode will increase the pressure drop along the channel and this will cause more liquid to enter the porous electrode.

In some embodiments of this disclosure, the half-cell is part of a flow battery. In other embodiments the half-cell is used for electroplating. In further embodiments, the half-cell can be used in a process for extracting or refining metal.

A flow path in contact with an electrode may contain obstructions which compel the liquid flow to change direction.

In some embodiments of this disclosure a flow guide provides an array of spaced obstructions which compel changes in flow direction. In some embodiments a flow-through electrode is formed of a porous mesh, and that mesh compels the liquid flow to make repeated changes of direction.

BRIEF DESCRIPTION OF THE DRAWINGS

Many of the drawings are diagrammatic and are intended to show component parts in relation to each other. Thin components such as membranes are shown with exaggerated thickness to make them and their positions more readily seen.

Fig 1 is a plot of experimental results showing onset of elastic turbulence.

Fig 2 is a perspective view of a flow guide.

Fig 3 is an enlarged top view of a portion of the flow guide.

Fig 4 is a diagram of apparatus for observing elastic turbulence by means of birefringence.

Fig 5 shows, in grayscale, pictures obtained with the apparatus of Fig 4.

Fig 6 is a slightly enlarged cross section of the flow chamber shown in Fig 4, fitted with electrodes.

Figs 7A and 7B show pictures obtained with the apparatus of Figs 4 and 6.

Fig 8 is a schematic diagram showing component parts of a flow battery.

Fig 9 is a view on the line C-C of Fig 8.

Fig 10 is a diagram showing component parts of another flow battery.

Fig 11 is a top view of a portion of the flow guide, showing the position of holes through its base.

Fig 12 is a schematic diagram showing component parts of a metal-air flow battery.

Fig 13 is a schematic diagram showing component parts of another metal-air flow battery.

Fig 14 shows three of the flow batteries of Fig 12 connected together.

Fig 15 is a schematic vertical cross section of an electroplating bath on the line E-E of Fig 16.

Fig 16 is a schematic horizontal cross section on the line D-D of Fig 15.

Fig 17 is a top view of a portion of another flow guide, showing pillars with a different cross section.

Fig 18 is a diagrammatic view of apparatus to determine operating parameters for an electrochemical half-cell.

Figs 19 and 20 show experimental results obtained with an example of such apparatus.

DETAILED DESCRIPTION

This detailed description shows various embodiments of the present disclosure and possibilities which may be used. It should be appreciated that features or possibilities described in combination may, where it is practical to do so, be used separately. Also, features or possibilities described in any embodiment may be used in any other embodiment, in so far as it is possible to do so.

The present disclosure uses the phenomenon of elastic turbulence. It is of course well known that Newtonian liquids such as pure water can undergo either laminar flow or turbulent flow. Such turbulent flow may be referred to as inertial turbulence. Conditions for laminar flow and inertial turbulent flow are often expressed by Reynolds number which is a ratio of inertial to viscous forces within a liquid. Reynolds number has no dimensions because it is a ratio. At Reynolds

number above about 2000 there is inertial turbulent flow. At Reynolds number below about 1500, flow of a Newtonian liquid is laminar. Flow paths within porous materials often have small dimensions and rapid flow rates through such materials are not practical with the consequence that it is not a practical possibility for flows through porous materials to undergo inertial turbulence.

Elastic turbulence is different from inertial turbulence. It is a physical phenomenon discovered at the end of the twentieth century. It has been observed at low flow speeds where Reynolds number is low and a Newtonian liquid would be in a state of laminar flow. Some early observations of elastic turbulence used the older term "elastic instability". However, that term is more general and includes other forms of instability in flow. Literature documents relating to elastic turbulence include a detailed discussion by Steinberg in Annual Review of Fluid Mechanics, vol 53, pages 27-58 (2021).

The phenomenon of elastic turbulence of a liquid requires:

(i) A solute which has elastic properties, enabling the liquid solution to display elastic turbulence,
(ii) A flow path for the liquid which compels a succession of changes in its direction of flow, and
(iii) Pumping the liquid along the flow path at a sufficient velocity.

A succession of changes in direction may be continuous curvature as in concentric or helical flow or may alternate between turning to the right and to the left.

Elastic turbulence occurs in solutions containing a solute which has a flexible structure. One category of material which is able to undergo elastic deformation and enable a solution to display elastic turbulence is a polymer containing long flexible linear chains. The number of monomer units in the polymer may be at least 5000 and may be considerably more such as at least 25,000. The monomer units may be present in linear chains of at least 1000 monomer units which may each be connected one to the next by a single covalent bond, so that one monomer unit can rotate relative to adjoining monomer units. Individual linear chains may be longer and a polymer may contain a linear chain of at least 5000 or even at least 10,000 monomer units. A polymer chain may contain only one kind of monomer or the chain may be a copolymer of more than one monomer, for instance a block copolymer which is linear. A polymer may also include side chains attached to a long chain of monomer units which are connected together by single covalent bonds. If a chain contains units which are themselves an oligomer, as in a block copolymer for instance, the oligomeric units may rotate relative to one another more freely than monomer residues within an oligomeric unit. A polymer may include some chain branching, for instance at branch points where three or more linear chains, each of at least 1000 monomer units, are connected together. When using a long chain polymer to enable elastic turbulence to occur, it is desirable to include a biocide to protect the long chain linear polymer from biodegradation.

The flexibility of the polymer chains enables the polymer molecules to become entangled. The flexibility of polymer chains can be described by means of a mathematical model. The freely jointed chain model is commonly used and the flexibility of a particular polymer can be indicated by parameters of an equivalent freely jointed chain (itself a mathematical model). A description of this approach is provided by Chapter 2 of "Polymer Physics" by Rubinstein and Colby, 2003, Oxford University Press. An equivalent freely jointed chain has the same mean-square end-to-end distance and the same maximum end-to-end distance as the actual polymer but is considered to consist of so-called Kuhn monomers which are freely rotatable relative to each other. These model monomers have a length, termed the Kuhn length, and a molar mass.

Polymers to enable elastic turbulence may contain at least one flexible polymer chain with length and composition represented by at least 5000 Kuhn monomers having a Kuhn length not more than 100 Angstroms (10nm) and possibly not more than 50 Angstoms. If a polymer is a single unbranched chain, its length and composition may correspond to at least 20,000 Kuhn monomers and possibly at least 50,000 Kuhn monomers.

The mean molecular weight of the polymer may be at least one Mega Dalton i.e. at least $10^6$ Daltons, possibly at least 10 Mega Daltons or more. The concentration of such long chain/high molecular weight polymer included in a solution for enabling elastic turbulence to occur may be under 5% by weight, for instance in a range from 0.05% or 0.1% up to 1% or 2% by weight.

Elastic turbulence has been observed with several different long chain polymers in solution. One such polymer is polyacrylamide, which may be hydrolysed or partially hydrolysed. Experimental evidence for elastic turbulence in a solution of high molecular weight polyacrylamide was given by Groisman and Steinberg in "Elastic Turbulence in a polymer solution flow" Nature, Vol 45 p53 (2000). Other instances of long chain polymers reported to give rise to elastic turbulence include polyisobutylene of molecular weight 4 to 6 Megadaltons dissolved in an organic solvent (Dris and Shaqfeh, J. Non-Newtonian Fluid Mech. Vol 80 pages 1 to58 (1998)), polystyrene of molecular weight 18 Megadaltons in an organic solvent (Magda and Larson, J. Non-Newtonian Fluid Mech. Vol 30 pages 1-19 (1988)) and polyethylene oxide of molecular weight 4 MegaDaltons in an aqueous solution (Davoodi et al, J. Liquid Mech. Vol 857, pages 823-850 (2018)). Kuhn lengths for polystyrene and polyethylene oxide given by Rubinstein and Colby, page 53 are 18 Angstroms and 11 Angstroms. Kuhn length for polyacrylamides has been reported as 15 to 25 Angstroms (Fetters, Lohse and Colby, "Chain Dimensions and Entanglement Spacings" in Physical Properties of Polymers Handbook; Mark,J.E.,Ed.; Springer: NewYork, 2007;pages

447-454).

Long chain partially hydrolysed polyacrylamide linear polymers with a molecular weight of more than 1 MegaDalton are available from SNF Floerger, whose headquarters are in Andrézieux, France.

Another category of material able to undergo elastic deformation and enable a solution to display elastic turbulence is a viscoelastic surfactant which forms worm-like micelles in solution. There is extensive scientific literature concerning surfactants which form worm-like micelles, their properties and applications. One review is Yang "Viscoelastic wormlike micelles and their applications" Current Opinion in Colloid & Interface Science vol 7 pages 276_281 (2002). Discussions of properties include Raghavan and Kaler "Highly Viscoelastic Wormlike Micellar Solutions Formed by Cationic Surfactants with Long Unsaturated Tails" Langmuir vol 17, pages 300-306 (2001) and Beaumont et al "Turbulent flows in highly elastic wormlike micelles" Soft Matter vol 9 page 735 (2013). An example, using cetyl trimethyl bromide as the surfactant, is mentioned by Fardin et al "Elastic Turbulence in Shear Banding Wormlike Micelles" Physical Review Letters vol 104 178303 (2010).

When a solution contains a substance able to cause elastic turbulence, the phenomenon of elastic turbulence occurs if the solution is flowing at a sufficient flow velocity (which may be a low velocity) and the path of flow causes the streamlines of the flow to curve. Consequently, one known possibility for a flow path which induces elastic turbulence is a serpentine channel. Another possibility is a flow path with obstructions which compel the streamlines of flow to change direction. Such obstructions may be manufactured and arranged in a pattern so as to compel flow around the obstructions to change direction.

A porous material can also provide a flow path which causes a succession of changes of direction. Changes in the directions of pores and connections between pores can compel changes of flow direction. A porous material may be fibrous and the openings between the fibres will provide flow paths with a succession of changes of direction.

The ability of a fluid composition to display elastic turbulence can be shown experimentally using a laboratory rheometer. In a cone and plate rheometer cell, the onset of elastic instability with application of increasing shear is observed as an apparent increase in viscosity at a particular shear rate associated with an abrupt increase in the noise in the measured torque signal. This has been described by D.O. Olagunju, "Instabilities and bifurcations of von Karman similarity solutions in swirling viscoelastic flow" in Z Angew Math Phys, 46 (1995) 224-238 and also by E. Tran, A. Clarke, "The relaxation time of entangled HPAM solutions in flow", Journal of Non-Newtonian Fluid Mechanics, 311 (2023) 104954.). The apparent increase in viscosity can be seen as a change in the slope (sometimes referred to as an uptick) in the plot of viscosity against shear rate.

Fig 1 shows results from experimental tests carried out with a laboratory rheometer operated to take measurements at increasing steps in shear rate and then at decreasing steps. It is a plot of dynamic viscosity against increasing shear rate for three aqueous solutions containing 0.456wt% sodium chloride, a small percentage of a polymer and a few drops of a biocide consisting of isopropanol and thiourea. In one of these aqueous solutions (points shown as open circles in Fig 1) the polymer was 0.24wt% of Flopaam 3630 from SNF Floerger which is linear polyacrylamide with a mean molecular weight of 18 to 20 MegaDaltons. In a second of these solutions (points shown as circles containing a cross) the polymer was 0.24wt% xanthan. In the third of these solutions (points shown as filled circles) the polymer was 0.12wt% Flopaam 3060 and 0.12wt% xanthan, i.e. a 1:1 mix. The solutions containing polyacrylamide, either alone or in mixture with xanthan, showed change in slope of the plotted curve, seen at approximately $150s^{-1}$. This indicated the onset of elastic turbulence with increasing shear rate. The solution containing xanthan had no such change of slope, indicating that this more rigid polymer did not enable elastic turbulence to occur.

A similar experiment used a solution containing 0.2wt% of Flopaam 6040, also from SNF Floerger, with of mean molecular weight between 25 and 30 MegaDaltons. Here too the onset of elastic turbulence with increasing shear rate was seen as a change in slope of the plotted curve at approximately $150s^{-1}$ indicating the onset of elastic turbulence. (Shear rates for the onset of elastic turbulence in electrochemical half-cells may be lower).

Figs 2 to 6 relate to experimental demonstrations of elastic turbulence in aqueous solutions of viscoelastic surfactant and also in aqueous solutions of a flexible polymer.

Fig 2 shows a flow guide 10 used in these experiments. It has a regularly spaced array of pillars 12 of square cross section integral with a base 13. Two edges of the array are completed with pillars 14 which have a triangular cross section. Fig 3 is an enlarged top view of a portion of the flow guide. As shown, the pillars 12 each have a square cross section with flat faces 16 meeting at corner edges 17 and 18. The width of a flat face 16 is indicated as "a" in Fig 3 and the spacing between the faces 16 of adjacent pillars is indicated as "b". The width of the gap between two confronting edges 18 is of course given by Pythagoras theorem as $\sqrt{(2b^2)}$. Each pillar 12 is positioned so that the diagonal across the square cross section between corner edges 17 is aligned with the overall direction of flow. As indicated by broken lines, liquid flows through the gaps between confronting edges 18 of adjacent pillars 12, but is then compelled to turn by pillars downstream. Thus the array of pillars 34 obstructs straight line through flow of liquid, causing the streamlines of the flow to change direction repeatedly.

The flow guide 10 is made of transparent polymer and is located within a chamber 20 which is shown in cross section in Fig 4. The chamber 20 is formed by two blocks of transparent polymer, 21, 22 held together by bolts which are not shown. The flow guide 10 is in a cavity between the two blocks. There is a liquid inlet 23 to the cavity and a liquid outlet 24.

When liquid is pumped through the chamber 20, the liquid enters the flow guide 10 at the end indicated 15 in Fig 2 and then flows through the gaps between the pillars 12. The repeated changes in direction can cause elastic turbulence to occur, if the liquid contains a substance able to display elastic turbulence and the flow velocity is sufficient.

The occurrence of elastic turbulence was observed using a technique utilizing the phenomenon of birefringence. The apparatus is shown in Fig 4. It has some similarity to apparatus described by Moss GR and Rothstein JP in "Flow of wormlike micelle solutions through a periodic array of cylinders". Journal of Non-Newtonian Fluid Mechanics, Vol 165 pages 1-13, 2410.

Beams from a red LED light 25R and a green LED light 25G are directed along paths, respectively shown as a solid line and as a broken line, towards a video camera 26. The chamber 20 is positioned between linear polarizing filters 28R, 29R set with their polarization directions at right angles (i,e, crossed) and between linear polarizing filters 28G, 29G which are also set with their polarization directions at right angles to each other. Consequently, no light can reach the video camera 26 unless birefringence in the chamber 20 alters the angle of polarization of light as it passes through the chamber. The filters 28R and 28G are set with their polarization directions at right angles to each other, so that the planes of polarization of the red and green light entering the chamber 16 are at right angles to each other. Dichroic mirrors 30 which pass the red beam and reflect the green beam are used to merge the red and green beams, then to separate them after they have passed through chamber 20, and subsequently to reunite them before they arrive at the camera 26.

Other parts of the apparatus are mirrors 38, lenses 32, red and green bandpass filters 34G and 34R and dichroic mirrors 36 which are set with a 90° difference in rotation with respect to the red beam path in order to cancel rotation of polarization induced due to Fresnel refraction. Such dichroic mirrors were not needed for the green beam because its polarization is such that no rotation of polarization was induced.

Wormlike micelles formed by viscoelastic surfactants are birefringent. Consequently, when these molecules become aligned by liquid flow within the chamber 20 and are illuminated with polarized red and green light, they can change the plane of polarization of the light thereby allowing some of this light to pass through the filters 29R and 29G to the camera, although this does not occur if the alignment of the micelles coincides with the plane of polarization of the light. Providing two light beams with different planes of polarization as they enter the chamber 20 addresses this issue: if micelles happen to be aligned with the red polarization, they will not be aligned with the green polarization and vice versa. Hence the apparatus is sensitive to polarization alignment in any direction.

When there is flow of a liquid containing wormlike micelles through the chamber, these micelles become aligned through extensional flow as the liquid flows around the pillars 12, 14 of the flow guide 10, and the birefringence from the aligned micelles can be seen as red or green colour in pictures or video recorded by the camera 26.

A first experiment was carried out using a solution similar to one mentioned by Moss and Rothstein in the paper above. This solution contained 100mM (approx. 4wt%) of the viscoelastic cationic surfactant cetylpyridinium chloride and 50mM (approx. 0.8wt%) of sodium salicylate dissolved in a brine of 100mM (approx. 0.6 wt%) sodium chloride in distilled water.

The viscoelastic solution was pumped through the chamber 20 at a low flow rate of 5ml per minute. The camera 26 recorded video at twenty frames per second for a period of 5 seconds and the recording showed that the pattern of flow around the pillars of the flow guide remained constant. Four pictures from that video recording, at half second intervals, are shown in grayscale as the top row in Fig 5 and it can be seen that there is negligible change from one picture to the next. The original coloured pictures showed a line of red colour extending in the flow direction from the downstream corner of each pillar. A white outline has been drawn around one of these indicated 40 in one picture. These lines of red colour remained at the same intensity and in the same position throughout the video recording. The flow rate was then increased to 25 ml/min and video was again recorded for 5 seconds. This video recording of flow at 25ml/min was very different from that at 5ml/min. It showed constant movement. Patches of colour, which is where extensional flow was aligning micelles, were constantly moving from one position to another and varying in intensity. Four pictures from the video with 25ml/min flow rate are reproduced in grayscale as the bottom row of Fig 5. There are a number of changes from each picture to the next. For instance, arrow 41 points to a patch of red colour which was present in one picture but absent from the preceding picture and diminished in the two subsequent pictures. At the position 42 there was an area of red colour which was not present in the preceding picture and again diminished in the next two pictures. The second picture in the lower row also shows an intense green area 43 which was not present in the first picture and which largely disappeared in the third picture. Thus it could be seen that flow at 5 ml/min was laminar but at 25ml/min the flow had become turbulent.

Similar experiments were carried out with a solution containing partially hydrolysed polyacrylamide of average molecular weight 18MDa (HPAM) to enable the display of elastic turbulence and xanthan as an additional thickening agent, and with a comparative solution containing only xanthan (which is too rigid to cause elastic turbulence, as mentioned above). These polymers do not form micelles but do cause birefringence when aligned. Flow rates and observations are given in the following table which also includes the comments from the above experiment with viscoelastic surfactant.

| Solutes | Flow rate | Comments concerning pictures |
|---|---|---|
| 4wt% cetyl pyridinium chloride 0.8wt% sodium | 5ml/min | Red lines extending downstream from pillars do not change position. No changes in overall appearance |
| salicylate and 0.6wt% sodium chloride | 25ml/min | Red lines extending downstream from pillars change angle relative to flow direction. Green areas appear, change position and disappear. |
| 0.25wt% HPAM and 0.25wt% xanthan | 5 ml/min | Red lines extending downstream from pillars do not change position. Green areas do not change. |
| | 15 ml/min, and 30ml/min | Movement of red areas extending downstream from pillars, prominent green areas appear and change position |
| 0.5wt% xanthan | 5 ml/min, 30ml/min and 40ml/min | Red and green areas do not change position at any flow rate |
| 0.25wt% xanthan | 30ml/min | Red and green areas do not change position |
| 0.12wt% HPAM, 0.12wt% xanthan, 0.465wt% NaCl | 5 ml/min | Red and green areas do not change position |
| | 45ml/min | Red and green areas change in shape and position |

It is apparent from these comments that the solution containing HPAM and xanthan displayed elastic turbulence at 15ml.sec and above, but solutions containing xanthan without HPAM did not display elastic turbulence even at 30ml/min.

Elastic turbulence is an instability of flow which gives rise to pressure fluctuations within the liquid. We have now found that such pressure fluctuations can detach gas bubbles from a surface before they have grown to a size at which buoyancy overcomes the forces holding bubbles to the surface, thereby by increasing the area of electrode surface which is available for reaction. A further experiment demonstrated this. As shown in Fig 6, the chamber 20 was provided with a platinum wire electrode 45 projecting into space between two of the pillars of the flow guide and a small copper block 46 as a second electrode at the surface of the upper block 21. Electrical connection to the block 46 is indicated at 47. A power supply of about 2 volts was connected to the electrodes, with copper block 46 positive and wire 45 negative.

A solution containing 0.12wt% HPAM of mean molecular weight 18MDa, 0.12wt% xanthan and 0.456wt% sodium chloride was pumped through the flow guide 10 and the flow was observed using the apparatus as shown in Fig 4. When the power supply was switched on, bubbles were seen in the flow downstream from the platinum wire electrode 45 shown in Fig 6. The bubbles could be seen in the flow because they refract light out of the light path and so appear dark.

Fig 7A is a picture of flow when the flow rate was 5ml/min at which there is no elastic turbulence and Fig 7B is a picture of flow when the flow rate was 45ml/min at which elastic turbulence is present. The pictures were processed to show the bubbles in contrast with the remainder of the picture and squares have been drawn to show the edges of some pillars more clearly.

The diameters of the bubbles were estimated visually by comparison with the dimensions across and between the pillars 12. When the flow rate was 5ml/min, which was too low to cause elastic turbulence, the bubbles had diameters in a range from approximately 0.2 to 0.5mm but when the flow rate was increased to 45ml/min at which elastic turbulence is present, the bubbles were clearly smaller and had diameters in a range from approximately 0.03 to 0.2mm, showing that the elastic turbulence was dislodging the bubbles from the platinum wire electrode 45 before they had grown to the size at which bubbles left the electrode in the absence of elastic turbulence.

Flow batteries in accordance with the present disclosure may use a wide range of electrochemistries including possibilities which have been described in published documents (but without any mention of additives enabling elastic turbulence). For electrochemistries in which a metal is deposited at the negative electrode of a cell, nickel, iron, zinc and tin have all been named in publications. Zinc is frequently chosen because it is available in substantial quantity at modest cost.

Figs 6 and 7 show a rechargeable flow battery in which the reaction in one half-cell is the deposition and dissolution of a metal. The battery has a casing 50 within which there are half-cells at either side of a separator 52. The half-cell to the left of the membrane 52 contains the negative electrode 54 of the battery. This is a flow through electrode consisting of a metal mesh, the metal of which undergoes deposition and dissolution during charge and discharge. The half-cell shown to the right of the membrane 52 contains a flow guide 56 which has an array of spaced pillars 58 of square cross section integral with a base 59 in the same manner as shown by Fig 2. However, as shown by the cross section in Fig 9, the flow guide 56 provides a larger array of pillars 58. The flow guide 56 is formed of graphite which is of course electrically conductive. This flow guide 56 provides the positive electrode of the battery. Electrical connections to the electrodes 54 and 56 are indicated at 60.

Each of the half-cells has an inlet 62 and an outlet 64. These are connected by piping 66 to pumps 67 which are connected to liquid electrolyte tanks 68a and 68b. The pumps 67 serve to circulate liquid from the tanks 68a and 68b, through the half-cells and back to the same tanks. Pressure sensors 69 are fitted close to each inlet and outlet.

In accordance with this disclosure, the liquid flowing through each of the half-cells includes a solute which enables the liquid to display elastic turbulence. This solute may be a high molecular weight linear polymer able to undergo elastic deformation or may be a viscoelastic surfactant capable of forming wormlike micelles in solution. If this solute is a polymer, the liquid may contain a small amount of a biocide to prevent biological degradation of the polymer. Pumping power is chosen such that flow in the piping and arriving at the inlet ends of the electrodes 54 and 56 is laminar, but when liquid from tank 68a is pumped through the electrode 54, the metal mesh which forms that electrode 54 will cause the streamlines of the flow to change direction many times and thereby create elastic turbulence of the flow within the electrode. This enhances mass transport of metal ions to and from the electrode surface. This gives more uniform deposition on the electrode and reduces formation of dendrites. It also reduces overpotential during charging which reduces the parasitic hydrogen evolution reaction.

Similarly when liquid from tank 68b is pumped through the half-cell to the right of the membrane 52, the pillars 58 compel the streamlines of the flow to change direction repeatedly as was indicated by dashed lines in Fig 3. This creates a state of elastic turbulence within the liquid as it flows through the flow guide 56 which is the positive electrode of the cell and enhances the transport of the reacting species to and from the electrode surface, thereby reducing overpotential.

**Example 1**

As an example, the battery may be a zinc-bromine battery. The liquid electrolyte for the half-cell on the left is an aqueous solution of zinc chloride, containing either a polymer or a viscoelastic surfactant as mentioned above. When the battery is being charged, zinc metal is deposited on the mesh 54 and during discharge, zinc from the mesh dissolves in the flowing liquid as zinc ions. Thus the reaction at the negative electrode is

$$Zn \quad Zn^{2+} + 2e^{-}$$

Elastic turbulence within the mesh electrode 54 enhances mass transport of zinc ions to and from the electrode surface. This gives more uniform deposition of zinc on the electrode during charging and reduces formation of zinc dendrites. It also reduces overpotential during charging which reduces the parasitic hydrogen evolution reaction.

In this example the liquid electrolyte of the half-cell to the right of the membrane is hydrobromic acid, containing either a high molecular weight flexible polymer or a viscoelastic surfactant as mentioned above. A quaternary ammonium bromide is mixed with the electrolyte in tank 68b. In the absence of this quaternary ammonium compound, the reaction at the positive electrode 56 would be the conversion of bromide ion to free bromine and vice versa. Flow batteries in which zinc bromide is reversibly converted to zinc metal and bromine are known and the present invention could be implemented with such a system, collecting the free bromine in the bottom of tank 68b. However, providing a quaternary ammonium compound in the electrolyte enables the bromine to form quaternary ammonium salts in which the cation is $Br_3^-$. This reduces the amount of free bromine, which is toxic, in the system. These quaternary ammonium salts have low solubility in water and collect in a liquid or solid state at the bottom of the tank 68b. A number of quaternary ammonium compounds for this purpose are discussed by Kű ttinger et al in "Systematic Study of Quaternary Ammonium Cations for Bromine Sequestering Application in High Energy Density Electrolytes for Hydrogen Bromine Redox Flow Batteries" Molecules, vol 26 page 2721 (2021). The reactions in the half-cell are:

$$3Br^{-} \rightleftharpoons Br_3^{-} + 2e^{-}$$

at the electrode:

$$QN^{+} + Br_3^{-} \rightleftharpoons QNBr_3$$

in solution: where Q represents a plurality of organic groups which together make four covalent bonds to nitrogen.

In order to prevent mixing of the liquid electrolytes of the half-cells and self-discharge as a result of recombination of bromine and zinc, the separator membrane 52 is an ion exchange membrane allowing passage of hydrogen ions but ideally preventing the passage of other dissolved species.

A redox flow battery as shown in Fig 8 can be implemented with other metals at the negative electrode and with other redox systems at the positive electrode. The following Examples 2, 3 and 4 show other electrochemistries which can be used in a flow battery as illustrated by Fig 8. In all of these examples the liquids pumped through the two half-cells both

contain a high molecular weight flexible polymer or a viscoelastic surfactant enabling them to display elastic turbulence. During operation, either for charging or discharging the battery, the liquids are pumped through the half-cells at a velocity such that flow in the tanks 68 and piping 66 is laminar but elastic turbulence occurs as the liquids pass through the electrode 54 and the flow guide 56. Elastic turbulence enhances transport to and from electrodes, reducing overpotential. During charging this leads to more uniform deposition of metal and reduced overpotential which reduces parasitic reactions.

**Example 2**

The electrochemistry of this example makes use of cerium salts. Liquid electrolyte for the half-cell at the left of apparatus as in Fig 8 is an aqueous solution of zinc, either as a methylsulphonate salt or as a sulphate. The liquid for the half-cell at the right is a solution of methyl sulphonate salts of cerium. While charging, zinc metal is deposited on the mesh electrode 54 and the cerium salt in solution in the right-hand half-cell is converted from $Ce^{4+}$ to $Ce^{3+}$. During discharge zinc is dissolved from the positive electrode and cerium ions are converted from $Ce^{3+}$ to $Ce^{4+}$. The separating membrane 52 is an ion exchange membrane allowing passage of hydrogen ions. The reactions can be written as:

$$Zn(CH_3SO_3)_2 + 2H^+ + 2e^- \rightleftharpoons Zn + 2CH_3SO_3H$$

$$Ce(CH_3SO_3)_3 + CH_3SO_3H \rightleftharpoons Ce(CH_3SO_3)_4 + 2H^+ + e^-$$

A description of this use of cerium salts in a half-cell is given by Leung et al in "Characterization of a zinc-cerium flow battery" Journal of Power Sources vol 196 page 5174 (2011).

**Example 3**

A further possibility with a flow battery as shown by Fig 8 makes use of alkaline liquids and a ferrocyanide/-ferricyanide couple. A system using these materials was described by Mahmood et al in "A Newly Designed Fixed Bed Redox Flow Battery Based on Zinc/Nickel System" J. Electrochem. Sci. Technol., vol 8(3), pages 236-243 (2017).

The liquid for the half-cell at the left is a sodium hydroxide solution. The liquid for the half-cell at the right of apparatus as in Fig 8 is a sodium hydroxide solution containing potassium ferrocyanide and / or potassium ferricyanide. During discharge, zinc from the mesh electrode 54 dissolves as sodium zincate and ferricyanide is converted to ferrocyanide at the graphite electrode 56. During charging, zinc deposits on the mesh electrode 54 and ferrocyanide ions are converted to ferricyanide at the graphite electrode 56. The reactions can be written as

$$Zn(OH)_4^- + 2e^- \rightleftharpoons Zn + 4OH^-$$

$$Fe(CN)_6^{4-} \rightleftharpoons Fe(CN)_6^{3-} + e^-$$

**Example 4**

This example uses iron as the metal with electrochemical reactions as given by Hruska and Savinell in "Investigation of factors affecting performance of the iron-redox battery" J. Electrochem. Soc. vol 128, page 18 (1981). The liquid in the left-hand half-cell of apparatus as in Fig 8 is a ferrous chloride solution also containing ammonium chloride to increase conductivity and the electrode 54 is an iron wire mesh. The liquid in the right-hand half-cell is a mixture of ferrous and ferric chlorides containing ammonium chloride and the electrode 56 is graphite. During charge iron metal is deposited on the negative electrode 54 while ferrous ions are converted to ferric ions in the right-hand half-cell. The reverse reactions take place during discharge.

Fig 10 of the drawings shows a flow battery of slightly different construction. Components which are the same as in Fig 8 are shown with the same reference numerals. In both half-cells the electrodes 70 are a porous carbon felt. Flow guides 72 are positioned between the separator membrane 52 and the electrodes 70. These flow guides are similar to the flow guide shown in Fig 8 but may be made of a non-conductive plastic material. They are positioned with their pillars 58 extending towards the electrodes and the base of each flow guide has through holes 74 as shown by Fig 11, to allow ions which pass through the separator to travel from one half-cell to the other. The liquid solutions contain a high molecular weight flexible polymer or a viscoelastic surfactant and are pumped at velocity such that flow through the tanks and piping is laminar but elastic turbulence occurs during flow through the flow guides. Flow within a carbon felt will be in a state of elastic turbulence for two reasons: because the fibres of the felt will compel the flow to make repeated changes of direction

and also because when liquid in a state of elastic turbulence flows from a flow guide into the carbon felt, the elastic turbulence will persist for some distance into the felt.

**Example 5**

As an example, a flow battery as shown in Fig 10 is used with a combination of materials suggested by Zhou et al in "A Sn-Fe flow battery with excellent rate and cycle performance" J. Power Sources vol 404 page 89 (2018).

The liquid of the left-hand half-cell is a solution of stannous chloride in hydrochloric acid. Tin is deposited on the electrode 54 during charge and dissolved from it during discharge. In the half-cell on the right the liquid is a mixture of ferrous and ferric chlorides in hydrochloric acid.

**Example 6**

As another example, the battery of Fig 10 is used with a system in which there is deposition of a solid phase in both half-cells. The electrochemistry has been published by Xie et al in "A highly reversible neutral zinc/manganese battery for stationary energy storage" Energy and Environmental Science vol13 page 135 (2020). The same liquid electrolyte is used in both half-cells. It contained zinc acetate and manganese acetate with potassium chloride to increase the concentration of ions in solution. During charge, zinc metal deposits on the carbon felt which forms the negative electrode in the left-hand half-cell and manganese dioxide deposits on the carbon felt electrode in the right-hand half-cell. Xie et al give the reaction of manganese acetate as

$$2Mn(CH_3CO_2)_2 + 2H_2O \rightleftharpoons MnO_2 + 4CH_3CO_2H + Mn^{2+} + 2e^-$$

**Example 7**

This example also uses the battery layout of Fig 10. It uses an electrochemistry published by Hazza et al in "A novel flow battery: A lead acid battery based on an electrolyte with soluble lead(II). Part I. Preliminary studies" Phys.Chem.Chem.Phys. vol 6 page 1773 (2004). There is deposition of solid in both half-cells. The electrolyte liquid in both half-cells is a solution of lead in methane sulphonic acid. During charging of the battery, lead is deposited onto the negative electrode and lead oxide is deposited onto the positive electrode. The reactions are

$$Pb^{2+} + 2e^- \rightleftharpoons Pb$$

at the negative electrode

$$2Pb^{2+} + 2H_2O - 2e^- \rightleftharpoons PbO_2 + \underset{20}{4H^+}$$

at the positive electrode and overall

$$2Pb(CH_3SO_3)_2 + 2H_2O \rightleftharpoons Pb + PbO_2 + 4(CH_3SO_3H)$$

**Example 8**

The battery layout of Fig 10 could also be used for a galvanic cell in which zinc and copper deposit at the negative and positive electrodes respectively. The half-cell at the left of Fig 10, with the negative electrode, uses a zinc sulphate solution as the electrolyte liquid. Zinc is deposited on the electrode during charge of the battery and dissolved during discharge. The half-cell at the right with the positive electrode has copper sulphate solution as the electrolyte liquid. Copper is deposited on the positive electrode during battery discharge and dissolved from it during charge.

Fig 12 shows a rechargeable metal-air flow battery. It has two half-cells within a casing and these are separated by a membrane 52. The half-cell at the left is similar to the left-hand half-cell shown in Fig 10. It contains the negative electrode 70 which is porous carbon felt and also contains a flow guide 72 between this electrode and the separator. This flow guide may be the same as the flow guides 72 used in the battery shown in Fig 10. A pump 67 is used to circulate electrolyte liquid, which contains a high molecular weight flexible polymer or a viscoelastic surfactant, from tank 68a at a flow rate such that flow in the tank 68a and piping 66 is laminar but flow through the guide 72 and through the porous carbon electrode 70 is in a state of elastic turbulence. Pressure sensors 69 are positioned near the inlet and outlet of this half-cell.

The electrolyte for this half-cell is an aqueous solution which contains metal ions.

During charge the metal is deposited on the carbon electrode and during discharge the metal is redissolved in the flowing liquid. The metal may be zinc, but other metals can be used. The separator 52 is an ion exchange membrane allowing passage of hydrogen ions but preventing metal ions from passing into the right-hand half-cell.

The right-hand half-cell converts water to oxygen and hydrogen ions during charge, and takes oxygen from the atmosphere during discharge. It has a section which contains liquid electrolyte and a gas section which is empty of liquid and is open to the atmosphere. The section which contains electrolyte liquid has a flow guide 72 next to the separator 52. This flow guide may be the same as the flow guide in the left-hand half-cell and (as already mentioned) the same as those in the flow battery of Fig 10. Next to the pillars of this flow guide is a porous catalyst layer 76, which may be carbon felt impregnated with one or two reaction catalyst(s). This catalyst layer 76 is in contact with an electric current carrier 78 which may be a mesh made of titanium or other metal which does not react in this system.

The gas section of this half-cell extends from the electric current carrier 78 to the casing 50. A porous layer 80 of a hydrophobic material lies against the current carrier 78. This layer 80 is referred to as the gas transport layer. Because it is hydrophobic, it prevents the aqueous liquid from flowing through it into the gas section of the half-cell.

The liquid of the right-hand half-cell is a neutral or acidic aqueous solution containing either a flexible high molecular weight polymer or a viscoelastic surfactant. It is drawn from the supply tank 82 and directed upwardly through the flow guide 72 by pump 84. It then flows through a gas/liquid separator 86 to allow any entrained gas to escape and returns from there to the supply tank 82. The flow rate is such that flow in the piping 88 is laminar but elastic turbulence is induced within the flow guide and possibly also the catalyst layer 76 whose fibrous material compels the flow make repeated changes of direction.

During charge the electrochemical reaction in the right-hand half-cell is the oxygen evolution reaction (OER) and a catalyst for this reaction is provided in the catalyst layer. Oxygen gas which is formed in this reaction can pass through the current collector mesh 78 into and through the gas transport layer 80 and be vented to the atmosphere. Some oxygen may pass from the catalyst layer into the liquid flow and this is vented to atmosphere at the separator 86.

During discharge, fan 90 is used to provide a flow of air through the gas section of the right hand half-cell, Atmospheric oxygen diffuses through the gas transport layer 80 and the mesh 78 to the catalyst layer 76 where it undergoes the oxygen reduction reaction (ORR). The catalyst layer 76 may contain a compound which is a catalyst for both the OER and ORR reactions, or it may contain a mixture of two catalysts, one for the OER and one for the ORR. Catalysts for the OER and ORR reactions, or both of them, are discussed by Nazir et al in "A Review of Rechargeable Zinc-Air Batteries: Recent Progress and Future Perspectives" Nano-Micro Letters vol 16 page 138.

Fig 13 shows a different configuration of metal-air battery which has separate half-cells for the OER and ORR reactions. This avoids circulating liquid into contact with the ORR catalyst during charging and correspondingly avoids circulating liquid into contact with the OER catalyst while discharging the battery.

The negative electrode is a porous metal mesh 92 (although a porous carbon electrode could be used) between two separator membranes 52. Electrolyte liquid from tank 68a is circulated through this electrode by pump 67 during both charge and discharge. The liquid contains a flexible high molecular weight polymer or a viscoelastic surfactant to provide elastic turbulence while it is flowing through this mesh electrode.

The half-cell to the right of the central mesh electrode is used during charging, and the half-cell to the left is used during battery discharge. Both of these half-cells have a flow guide 72, a catalyst layer 76a or 76b, a current collector mesh 78a or 78b and a gas transport layer 80a or 80b as shown in Fig 12. The catalyst layer 76a is impregnated with an ORR catalyst and the catalyst layer 76b is impregnated with an OER catalyst. During charging, liquid from the tank 82 is circulated through the right-hand half-cell, using pump 94 while fan 90 and pump 95 are switched off and electrical connection 60a is not connected to the power supply. During battery discharge, pump 96 is used to circulate liquid through the left-hand half-cell while the pump 94 is switched off and the fan 90 is used to blow air over and into the gas transport layer 80a.

To simplify explanation, Figs 8 to 12 have shown single electrochemical cells consisting of two half-cells. It is common practice to assemble a plurality of electrochemical cells together. This is illustrated by Fig 14 which shows three of the metal-air batteries of Fig 12 arranged side by side. In this embodiment, the half-cells in which metal is deposited at and dissolved from the electrodes are supplied with liquid electrolyte by a single pump 67 from a single tank 68. The liquid from the half-cells in which oxygen gas is formed during charging is taken to a single gas /liquid separator 86. A single fan 90 supplies air to these half-cells during discharge. The current carriers, which are in the half-cells producing oxygen may be electrically connected and the negative electrodes in the half-cells producing hydrogen may likewise be electrically connected together, so that the cells are electrically in parallel. However, series connections of cells are also possible.

In the various flow battery embodiments mentioned above, the electrolyte liquids in both half-cells contain a solute which is either a high molecular weight polymer which is flexible or a surfactant which forms worm like micelles and in either case enables elastic turbulence to occur. However, it is possible that elastic turbulence might be used in one half-cell where solid is deposited at the electrode, but not used in the other half-cell.

Figs 12 and 13 show the use of elastic turbulence in an electroplating process. As shown in the cross section, the

process is carried out in an electroplating bath 102 containing an aqueous electrolyte liquid, with surface at 104. Submerged in the liquid and resting on supports 106 is a workpiece 108 whose upper surface is to be electroplated. Electrical connections 110 lead to a submerged positive electrode 112 and to the workpiece 108.

A flow guide 114 is used to provide elastic turbulence at the upper surface of the workpiece 108. This flow guide 114 has square cross section pillars 116 extending from a base 118 similarly to the flow guide shown in Fig 2. It is positioned above the workpiece 108 with its pillars 116 extending downwards towards the workpiece 108, but with a small gap between the ends of the pillars and the workpiece. The flow guide 114 rests on supports 120, 121 at the ends of the plating bath. The horizontal cross section which is Fig 15 shows that side edges of the flow guide abut sides 122 of the electroplating bath. This horizontal cross section shows the rectangular outline 124 of the workpiece 108 below the flow guide. It can be seen that the flow guide 114 extends beyond the side and end edges of the workpiece.

A pump 130 draws electrolyte liquid through tubing 132 from a lower part of the bath and directs it through tubing 134 into a horizontal distribution manifold 136. Above the manifold a plate 128 extends from the end of the bath to one end of the flow guide. The walls of the bath together with support 121 and plate 128 compel flow from the manifold 136 to flow into and through the flow guide 114 in which the pillars 116 of the guide cause repeated changes of direction and so cause the flowing liquid to display elastic turbulence. This elastic turbulence continues into the short gap between the flow guide 114 and the top face 108 of the workpiece and so enhances the transport of metal ions to the top surface of the workpiece, giving uniform deposition of metal on the workpiece and mitigating overvoltage and parasitic reactions. The elastic turbulence extends over the full area of the top surface of the workpiece because the flow guide extends beyond the side and end edges of the workpiece.

In the flow batteries and the electroplating bath described above, the flow guides are shown with square cross section pillars, as in Fig 2. However, other shapes of flow guide, and more specifically other shapes of pillars can be used. This is illustrated by Fig 16 which shows another possible cross section for pillars 140. The surfaces 142 have convex curvature and intersect concave surfaces 144 at edges 146. Electrolyte liquid flows through the gaps between edges 146 as shown by the broken lines and is compelled by the arrangement of pillars 140 to change direction as it does so.

For electrochemical processes as described above, with a polymer or surfactant present in a liquid electrolyte, a flow rate able to cause elastic turbulence to occur may be found by monitoring electric current while progressively increasing the flow rate. When elastic turbulence begins it will be apparent as an increase in the flow of electric current because of improved mass transport to or from an electrode.

However, it is also possible to determine a suitable flow rate through a flow guide or a porous electrode without operation of a half-cell. This is illustrated by Figs 18 to 20. As shown in Fig 18, a structure 150 has dimensions to fit around a proposed flow guide 76 as in a half-cell but with no separator or membrane present. Instead, a plate 152 is fitted against the tops of the pillars of the flow guide 56. The inlet 160 is connected to a pump 156 which delivers liquid from a tank 154 which is maintained at a fixed temperature. This liquid should be the same as the liquid which will flow through the half-cell when it is in the flow battery. The outlet 162 is connected to a graduated vessel 158 for measuring volume of liquid which has been pumped through the flow guide 56 in a chosen interval of time, and thereby determining the flow rate.

Pressure sensors 164, 166 are fitted to the inlet and outlet regions of the structure 150, upstream and downstream of the flow guide 56. When liquid from the tank 154 is pumped through the flow guide 56 there will be a pressure drop between the inlet pressure sensor 164 and the outlet pressure sensor 166. When the flow rate is very low, the flow will be laminar, without any elastic turbulence. The minimum flow rate to cause elastic turbulence in the half-cell can be found by progressively increasing the pump speed to increase the flow rate and plotting the flow rate against the pressure drop or the pump speed (which is proportional to pressure drop). This plot will show a change in slope on reaching the flow rate at which elastic turbulence begins.

This is illustrated by the following description of experimental work with apparatus similar to that shown. The results of the experiments are shown in Figs 19 and 20. An initial calibration determined relationships between pump speed and flow rate. The tank 154 was filled with water. The pump was used to propel water through the half-cell at progressively increasing flow rate. The pump speeds and the flow rates measured downstream of the half-cell were recorded and are shown in Fig 19 (triangle points). This calibration procedure was then repeated with an aqueous solution containing 0.1 wt% of Flopaam 3630 polyacrylamide in the tank 154. This gave the non-linear plot also shown in Fig 19 (circular points).

Fig 20 shows the measured flow rates plotted against pump speeds. With water the plot was approximately linear (as would be expected because water is a Newtonian fluid) but with the polyacrylamide solution there was a very sharp change in the slope of the plot at the point E, indicating that the flow rate at this point was the minimum required to cause elastic turbulence with that polyacrylamide solution and apparatus.

Measurements of this kind make it possible to estimate Reynolds number for flow through a flow guide 56. The formula which may be used to determine Reynolds number (Re) for flow through a chamber containing obstructions so as to compel the flow streamlines to bend is:

$$Re = \frac{\rho UL}{\eta}$$

where $\rho$ is density of the fluid in Kg per cubic metre,
$U$ is the flow velocity in metres per second,
$L$ is the width of the gaps between the obstructions in the chamber, and
$\eta$ is the viscosity of the fluid in Pascal.sec.

If the flow rate is measured as volume in unit time, the formula above becomes

$$Re = \frac{\rho QL}{\eta A}$$

where Q is the flow rate in cubic metres per second and $A$ is the cross sectional area, transverse to the overall direction of flow, through which the flow passes.

In an example of a flow guide as shown by Fig 11, the flat faces of the pillars had a width "a" of 4mm and the height of the pillars was 7mm. The spacing "b" between the faces of adjacent pillars was 2mm and so the gaps between adjacent edges was √8 = 2.83mm. A full line of pillars transverse to the overall direction of flow contained 12 pillars with 11 gaps between edges 44, and so the cross section available for flow was

$$11 \text{ x } 7 \text{ x } 2.83\text{mm}^2 = 11 \text{ x } 7.10^{-3} \text{ x } 2.83.10^{-3} \text{ m}^2.$$

Flow rate was measured as 75 ml.sec$^{-1}$ = 7.5 x 10$^{-5}$ m$^3$sec$^{-1}$. Density of the fluid was 1000kg/m$^3$; viscosity was 0.008Pa.sec. Putting these numbers into the formula mentioned above

$$Re = \frac{\rho QL}{\eta A} = \frac{1000\ x\ 7.5.10^{-5}\ x\ 2.83.10^{-3}}{8.10^{-3}\ x\ 11\ x\ 7.10^{-3}\ x\ 2.83.10^{-3}}$$

which is Re = 12.17.

In embodiments of this disclosure where a flow guide is used, the rate of flow through the flow guide may be such that the Reynolds number is at least 1 or 2 but not more than 250. These are Reynolds numbers at which a Newtonian liquid with no additive to enable elastic turbulence would be in a state of laminar flow.

Various embodiments of this disclosure have been set out above. These are intended to assist understanding of this disclosure, but not to limit it in any way. It should be appreciated that any features or possibilities described in combination may, where it is practical to do so, be used individually. Also, features or possibilities mentioned in the following claims or described in any embodiment may be used in any other embodiment, in so far as it is practical to do so and in particular where two or more of the following claims are dependent on the same preceding claim, the reader should understand that the present disclosure includes any possible combination of any two or more or all of those dependent claims with each other and also with that preceding claim.

In particular, any rechargeable battery may use any polymer or any viscoelastic surfactant to enable elastic turbulence in one or more of its half-cells and may use a flow guide with an array of obstructions, or a porous material, or both of these to cause changes of flow direction and thereby cause elastic turbulence to occur. A rechargeable battery may use any of the electrochemistries mentioned herein for a half-cell in which there is deposition of a solid and may use any of the structures and electrochemistries mentioned herein for another half-cell, with or without elastic turbulence in that other half-cell.

**Claims**

**1.** A system comprising

an electrochemical half-cell which comprises:

an electrode, and

a liquid containing a dissolved reactive species which is able to undergo an electrochemical reaction at the electrode where the reaction converts the reactive species to a solid which deposits at the electrode,

structure defining a liquid flow path carrying flow of the liquid into contact with the electrode, and
at least one pump configured for propelling the liquid along the flow path,

wherein:

the liquid contains a solute enabling the liquid to display elastic turbulence, and
the flow path to or at the electrode is configured to compel changes in the direction of liquid flow to cause elastic turbulence within flow of the liquid in contact with the electrode.

**2.** The system of claim 1 wherein the solute enabling the liquid to display elastic turbulence is a linear polymer with a molecular weight of at least $10^6$ Daltons or wherein the solute enabling the liquid to display elastic turbulence is a viscoelastic surfactant which forms worm-like micelles in the liquid.

**3.** The system of claim 1 or claim 2 wherein the liquid flow path comprises a flow guide which is located adjacent to the electrode and comprises a spaced array of obstructions positioned to compel flow along the flow path to make changes of direction.

**4.** The system of any preceding claim wherein the dissolved reactive species comprises a compound of a metal from the group consisting of zinc, iron, nickel, lead, copper and tin and wherein the deposit at the electrode is the solid metal and/or wherein the dissolved reactive species comprises a compound of a metal and the deposit at the electrode is a solid metal oxide or metal hydroxide.

**5.** The system of any preceding claim wherein the half-cell is one half-cell of a rechargeable battery and the system comprises a storage vessel for the liquid, connected to the at least one pump.

**6.** A rechargeable battery system comprising

a first electrochemical half-cell which comprises:

a first electrode, and
a liquid containing a dissolved reactive species which is able to undergo an electrochemical reaction at the first electrode where the reaction converts the reactive species to a solid which deposits at the first electrode,

structure defining a liquid flow path carrying flow of the liquid into contact with the first electrode,
a storage vessel for the liquid, and
at least one pump configured for propelling the liquid from the storage vessel along the flow path into contact with the first electrode,
wherein the liquid contains a solute enabling the liquid to display elastic turbulence, and the flow path to or at the first electrode is configured to compel changes in the direction of liquid flow to cause elastic turbulence within flow of the liquid in contact with the first electrode; and
a second electrochemical half-cell which comprises:

a second electrode, and
a liquid containing a second dissolved reactive species which is able to undergo an electrochemical reaction at the second electrode,
structure defining a liquid flow path carrying flow of the liquid into contact with the second electrode,
a storage vessel for the liquid of the second half-cell, and
at least one pump configured for propelling the liquid from the storage vessel along the flow path into contact with the second electrode.

**7.** The battery system of claim 6 wherein:

the liquid of the second half-cell also contains a solute enabling the liquid to display elastic turbulence, and
the flow path to or at the second electrode is configured to compel changes in the direction of liquid flow to cause elastic turbulence within flow of the liquid in contact with the second electrode.

**8.** The battery system of claim 7 wherein the second dissolved reactive species is able to undergo an electrochemical reaction at the second electrode which converts the second dissolved reactive species to a solid which deposits at the second electrode,

**9.** The battery system of claim 8 wherein the first dissolved reactive species comprises a metal compound and reaction at the first electrode converts the first reactive species to solid metal which deposits at the first electrode and wherein the second dissolved reactive species is a metal compound and reaction at the second electrode converts the second dissolved reactive species to a solid which deposits on the second electrode as a metal oxide or metal hydroxide.

**10.** A metal-air rechargeable battery system comprising first and second electrochemical half-cells with a separator membrane between the first and second half-cells, wherein the first half-cell comprises:

a first electrode,
a first liquid containing a dissolved reactive species which is a compound of a metal able to undergo an electrochemical reaction at the electrode where the reaction converts the dissolved reactive species to solid metal which deposits at the electrode,
structure defining a liquid flow path carrying flow of the liquid into contact with the first electrode, and at least one pump configured for propelling the liquid along the flow path into contact with the first electrode,
wherein:

the liquid contains a solute enabling the liquid to display elastic turbulence, and
the flow path to or at the electrode is configured to compel changes in the direction of liquid flow, to cause elastic turbulence within flow of the liquid in contact with the first electrode;
and the second half-cell comprises
a second liquid which is able to undergo electrochemical reaction to form oxygen gas at one or more porous bodies within the second half-cell, wherein the one or more porous bodies in the second half-cell comprise a catalyst for the evolution of oxygen from water;
structure defining a liquid flow path carrying flow of the second liquid into contact with the one or more porous bodies, and
at least one pump for propelling the second liquid along the flow path,
wherein:

the second liquid contains a solute enabling the second liquid to display elastic turbulence, and
the flow path is configured to compel changes in the direction of liquid flow, to cause elastic turbulence within flow of the second liquid in contact with the one or more porous bodies where oxygen is formed.

**11.** The metal-air rechargeable battery system of claim 10 wherein the one or more porous bodies in the second half-cell further comprise a catalyst for the reduction of oxygen to water or further comprising a third half-cell and a separator membrane between the first and third half-cells, wherein the third half-cell comprises one or more porous bodies which comprise a catalyst for the reduction of oxygen to water.

**12.** A method of operating a flowing electrochemical half-cell with an electrode in contact with a flow path for a liquid containing a dissolved reactive species able to undergo electrochemical reaction at the electrode converting the dissolved reactive species to a solid which deposits at the electrode, wherein:

the liquid contains a solute enabling the liquid to display elastic turbulence,
the flow path in contact with the electrode compels changes in the direction of liquid flow, and
the method comprises pumping the liquid along the flow path with the liquid in a condition of elastic turbulence while it is in contact with the electrode.

**13.** The method of claim 12 wherein the solute enabling the liquid to display elastic turbulence is a linear polymer with a molecular weight of at least $10^6$ Daltons or wherein the solute enabling the liquid to display elastic turbulence is a viscoelastic surfactant which forms worm-like micelles in the liquid.

**14.** The method of claim 12 or claim 13 wherein the dissolved reactive species comprises a compound of a metal from the group consisting of zinc, iron, nickel, lead, copper and tin, and the solid which deposits at the electrode is the metal and/or wherein the dissolved reactive species comprises a compound of a metal and the deposit on the electrode is a metal oxide or metal hydroxide.

**15.** The method of any one of claims 12 to 14 wherein the half-cell is one half-cell of a rechargeable battery system comprising a storage vessel for the liquid and the method also comprises pumping the liquid from the storage vessel to the half-cell.

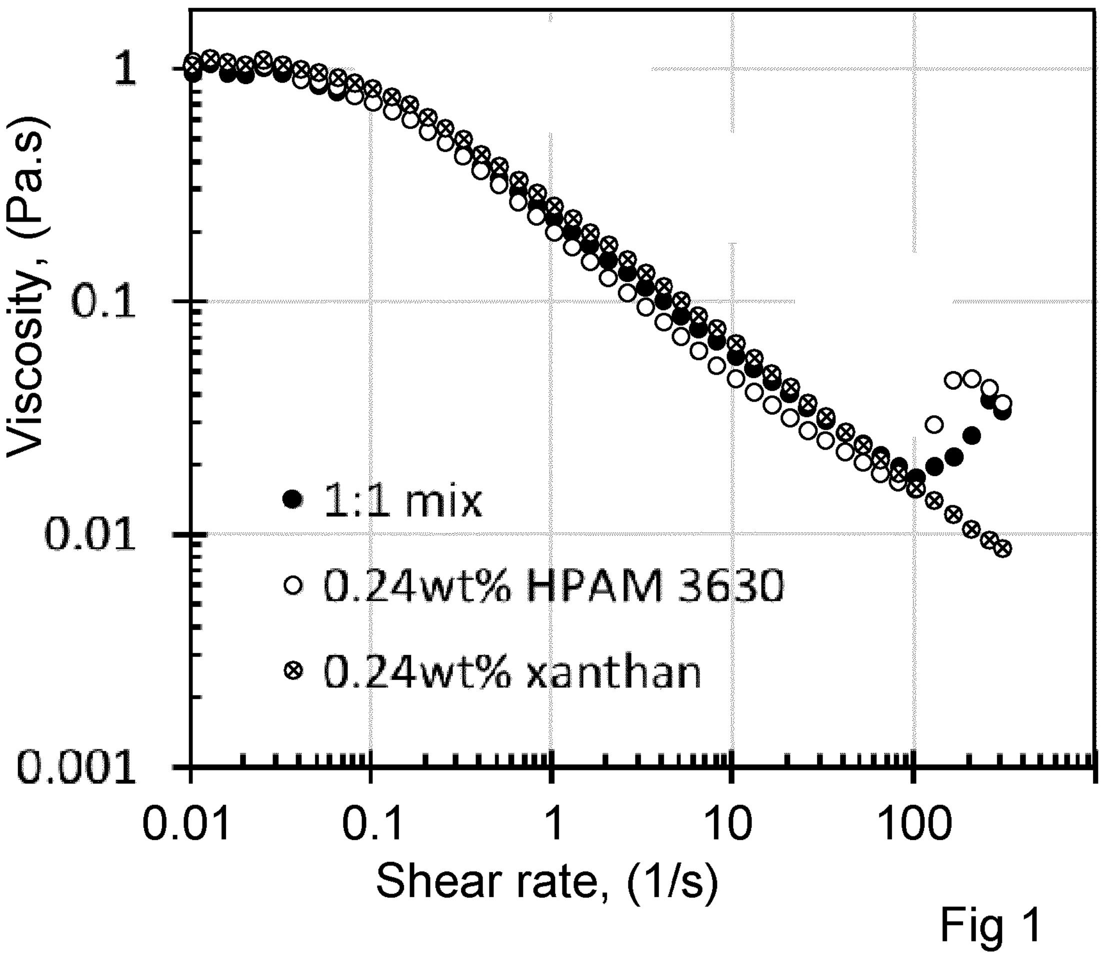
Viscosity, (Pa.s)
1
0.1
0.01
0.001
0.01
0.1
1
10
100
Shear rate, (1/s)
1:1 mix
0.24wt% HPAM 3630
0.24wt% xanthan

Fig 1

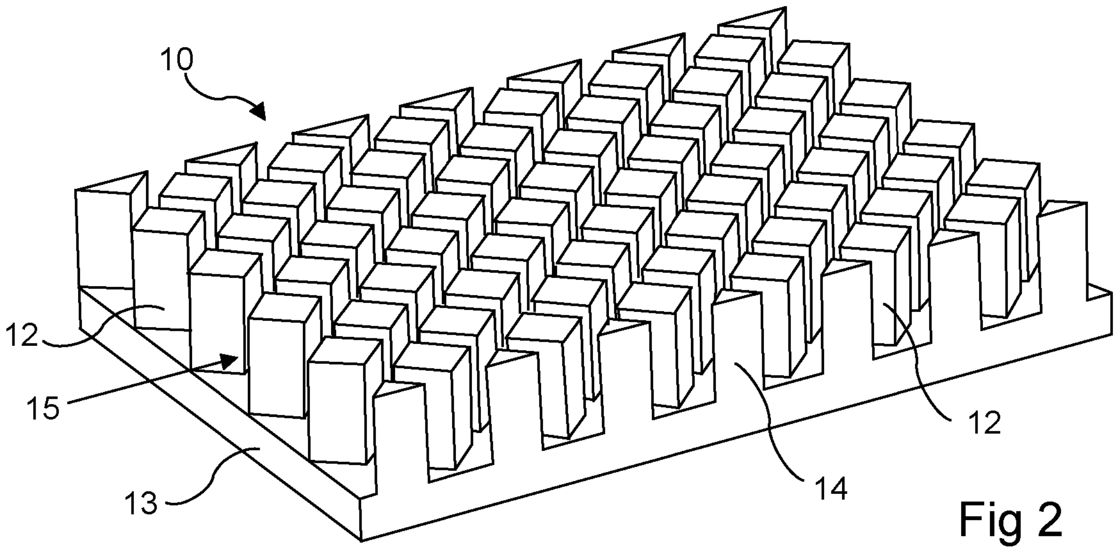
10
12
15
13
14
12

Fig 2

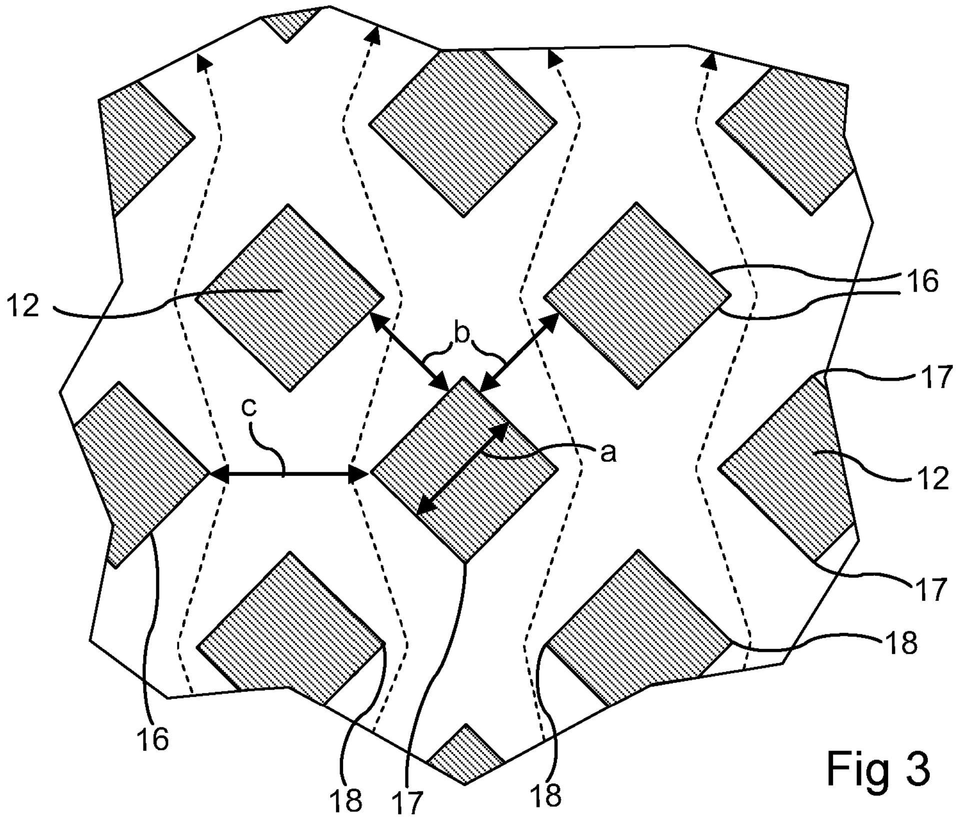


Fig 3

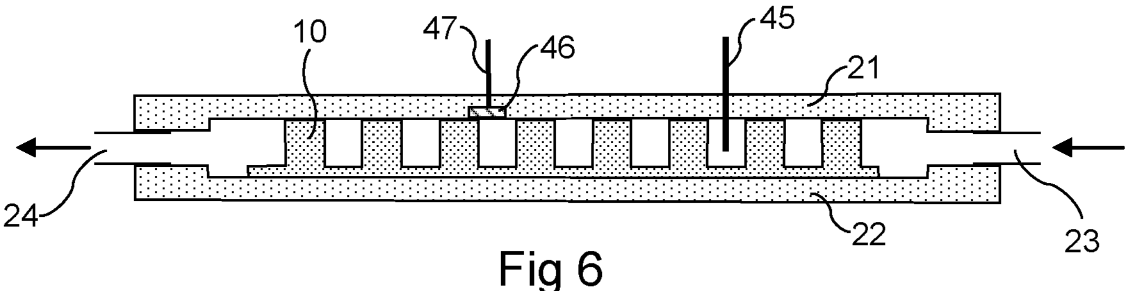


Fig 6

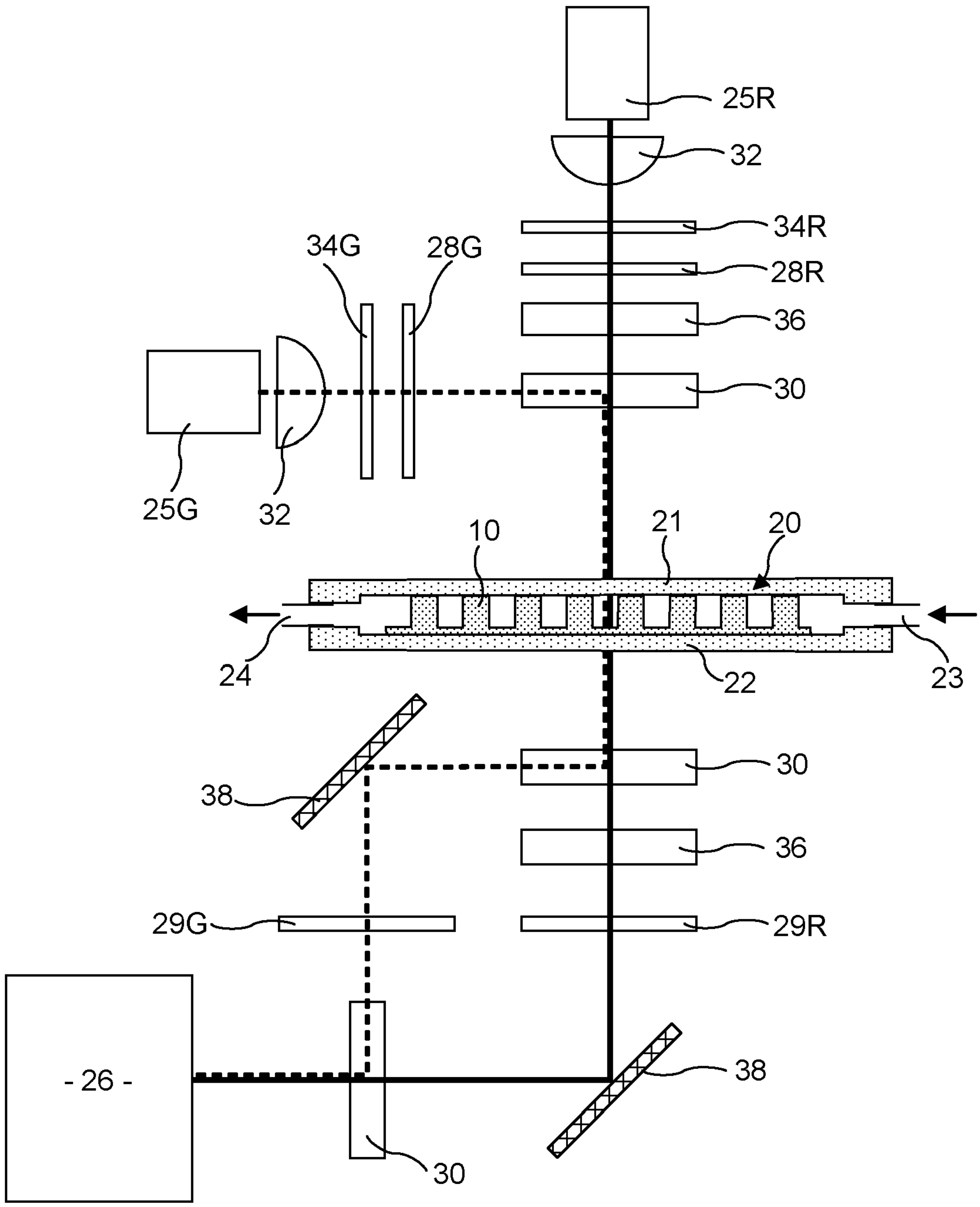
25R
32
34R
28R
36
30
34G
28G
25G
32
10
21
20
24
22
23
38
30
36
29G
29R
- 26 -
38
30

Fig 4

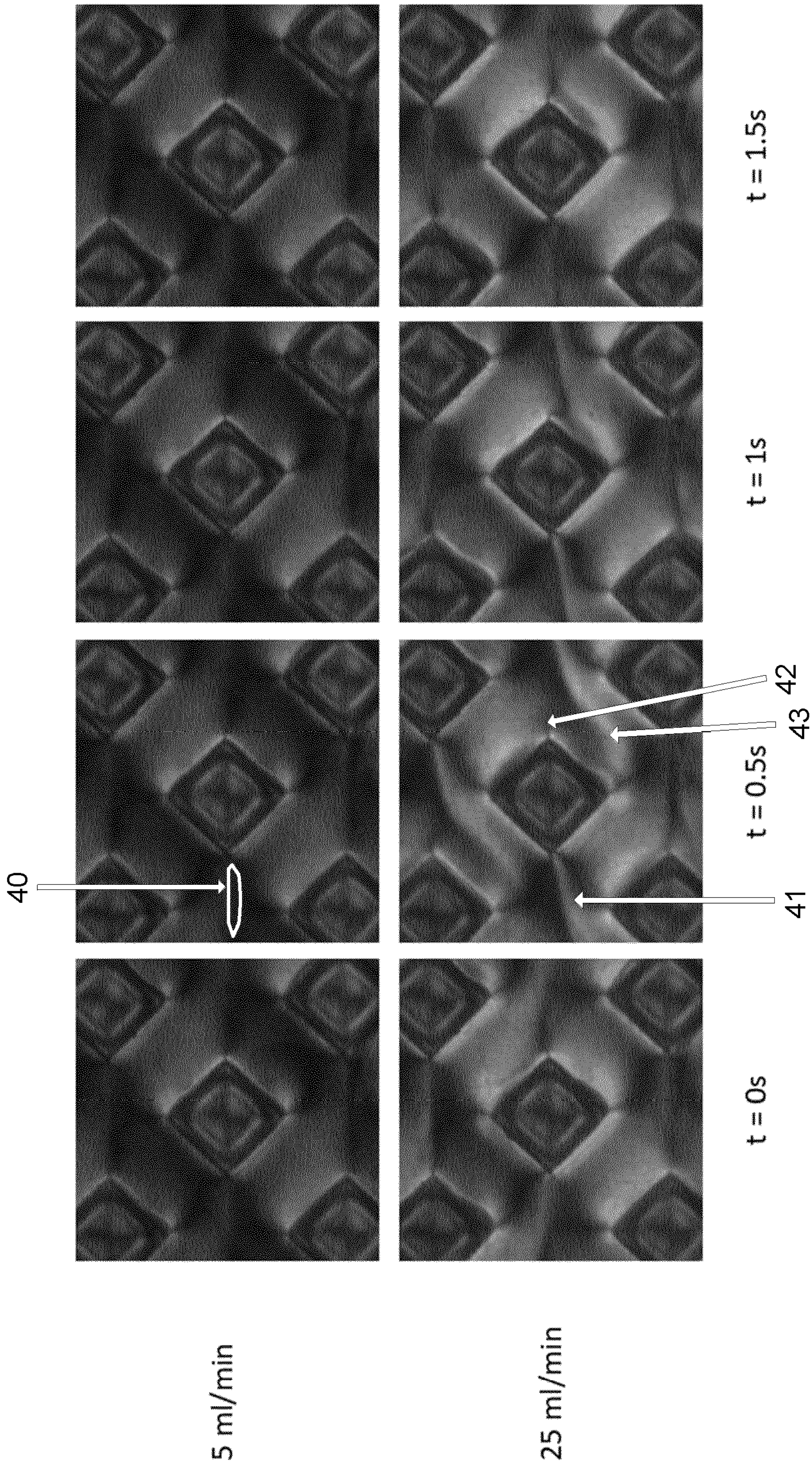


Fig 5

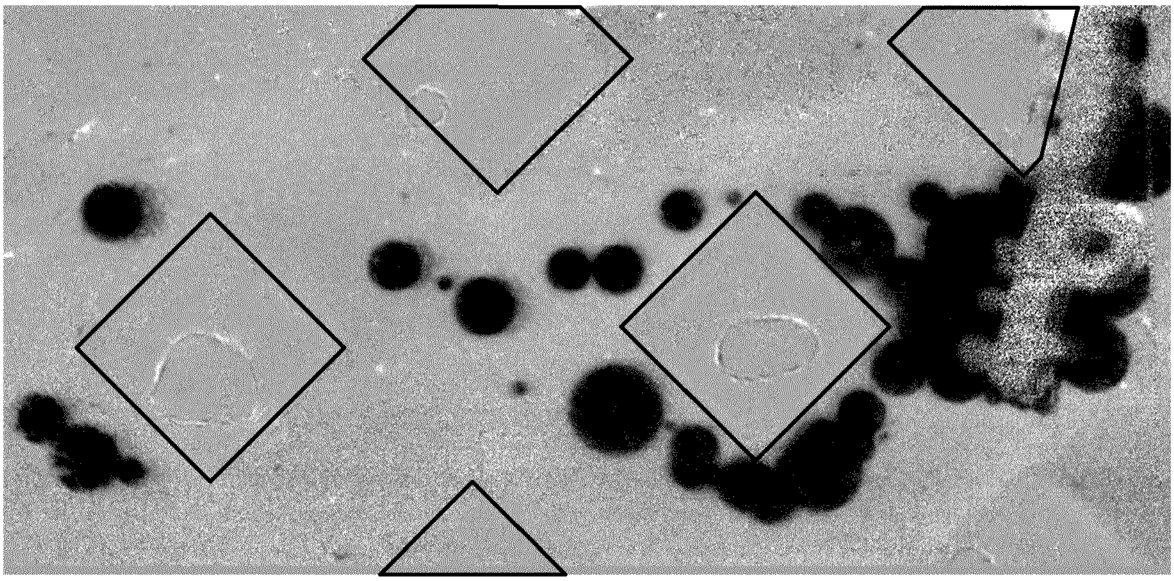

Fig 7A

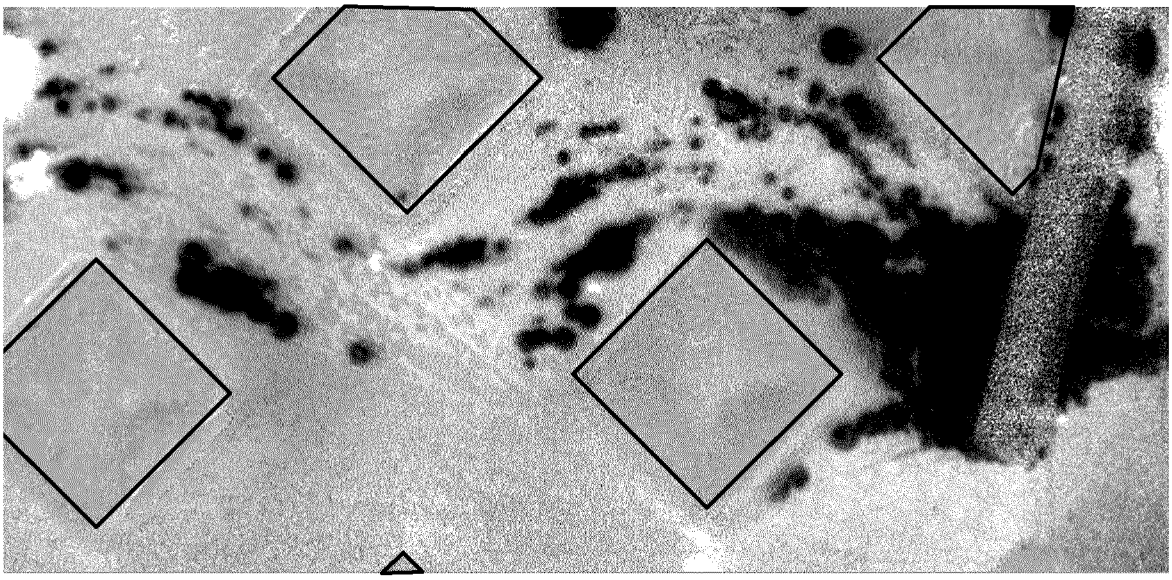

Fig 7B

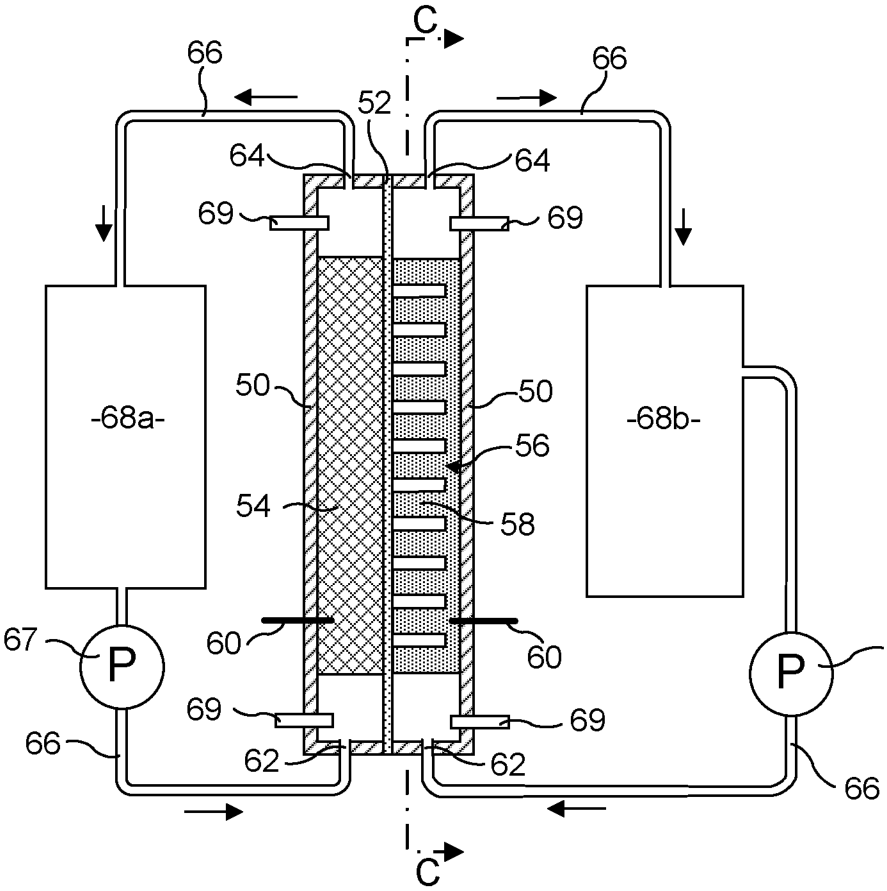
C
66
66
52
64
64
69
69
50
50
-68a-
-68b-
56
54
58
60
60
67
67
P
P
69
69
66
62
62
66
C

Fig 8

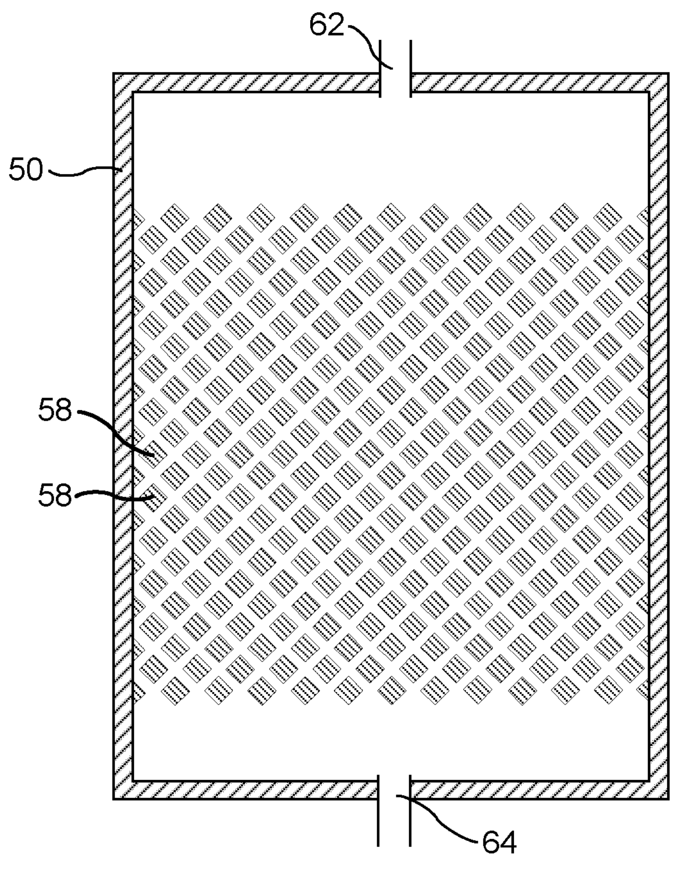
62
50
58
58
64

Fig 9

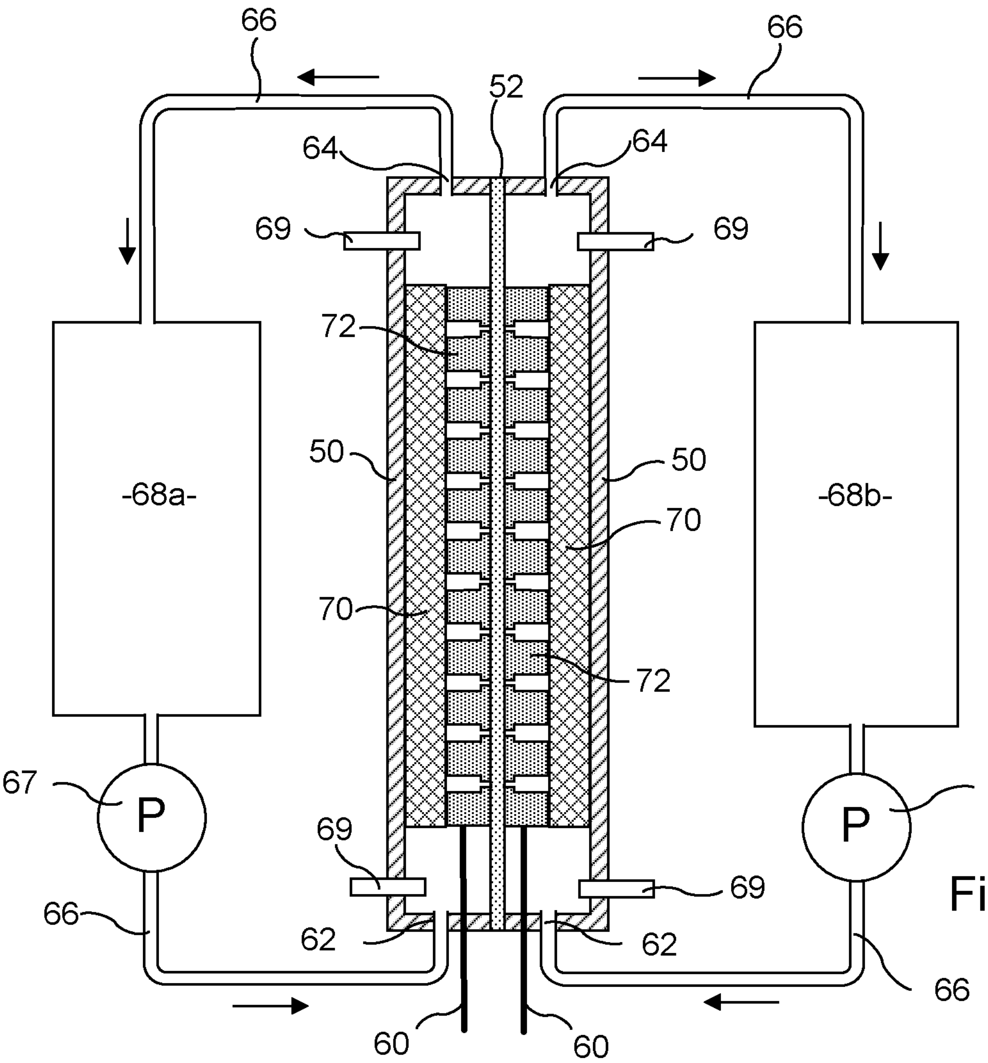
66
66
52
64
64
69
69
72
50
50
-68a-
-68b-
70
70
72
67
P
67
P
69
69
66
62
62
66
60
60

Fig 10

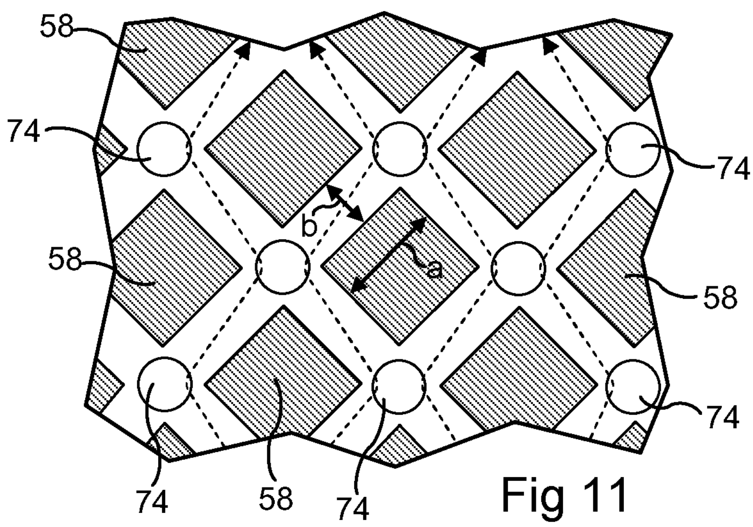
58
74
74
b
a
58
58
74
58
74
74

Fig 11

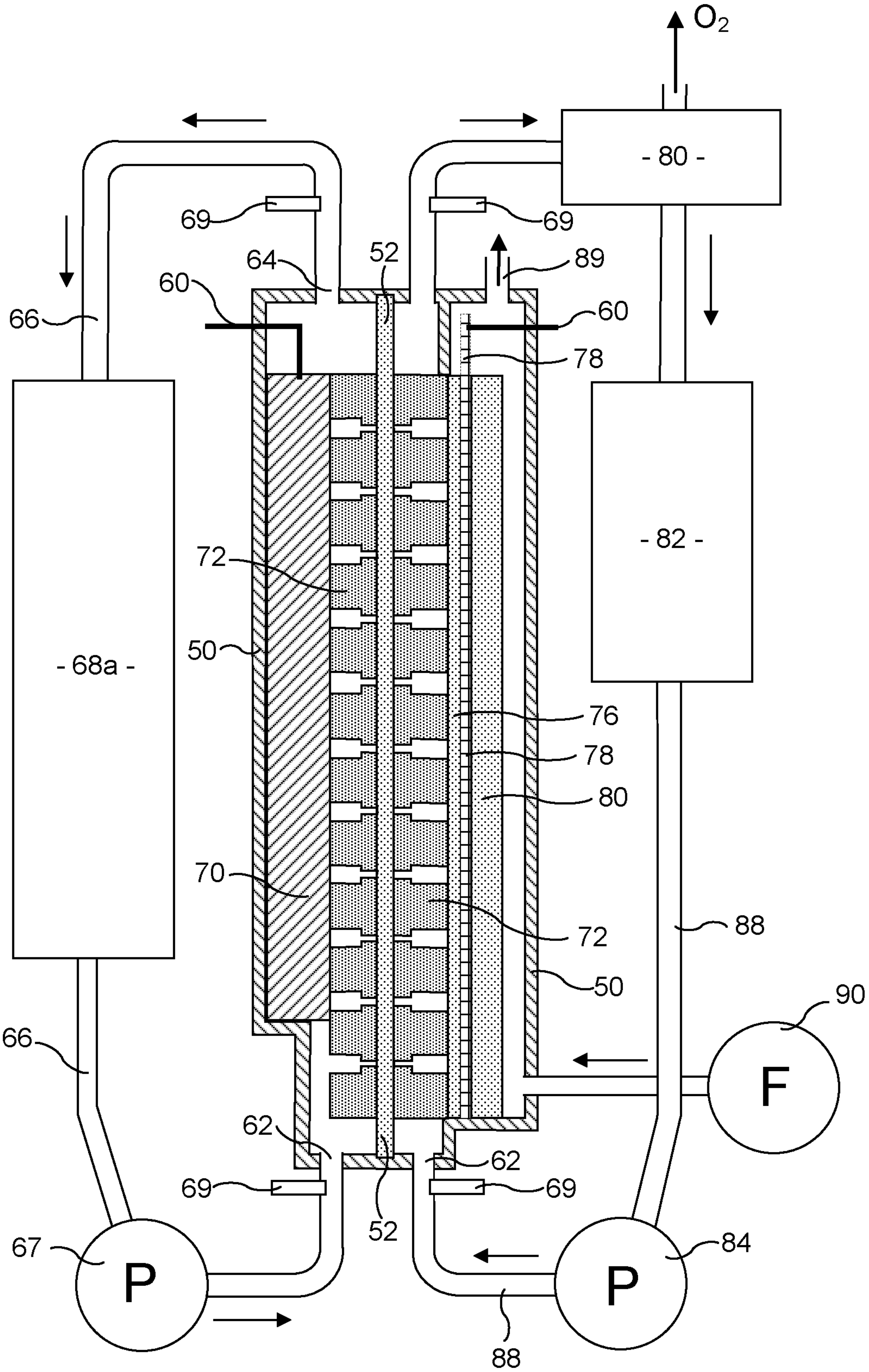
O2
- 80 -
69
69
52
64
89
60
60
66
78
- 68a -
- 82 -
72
50
76
78
80
70
72
88
50
90
F
66
62
62
69
69
52
67
P
P
84
88

Fig 12

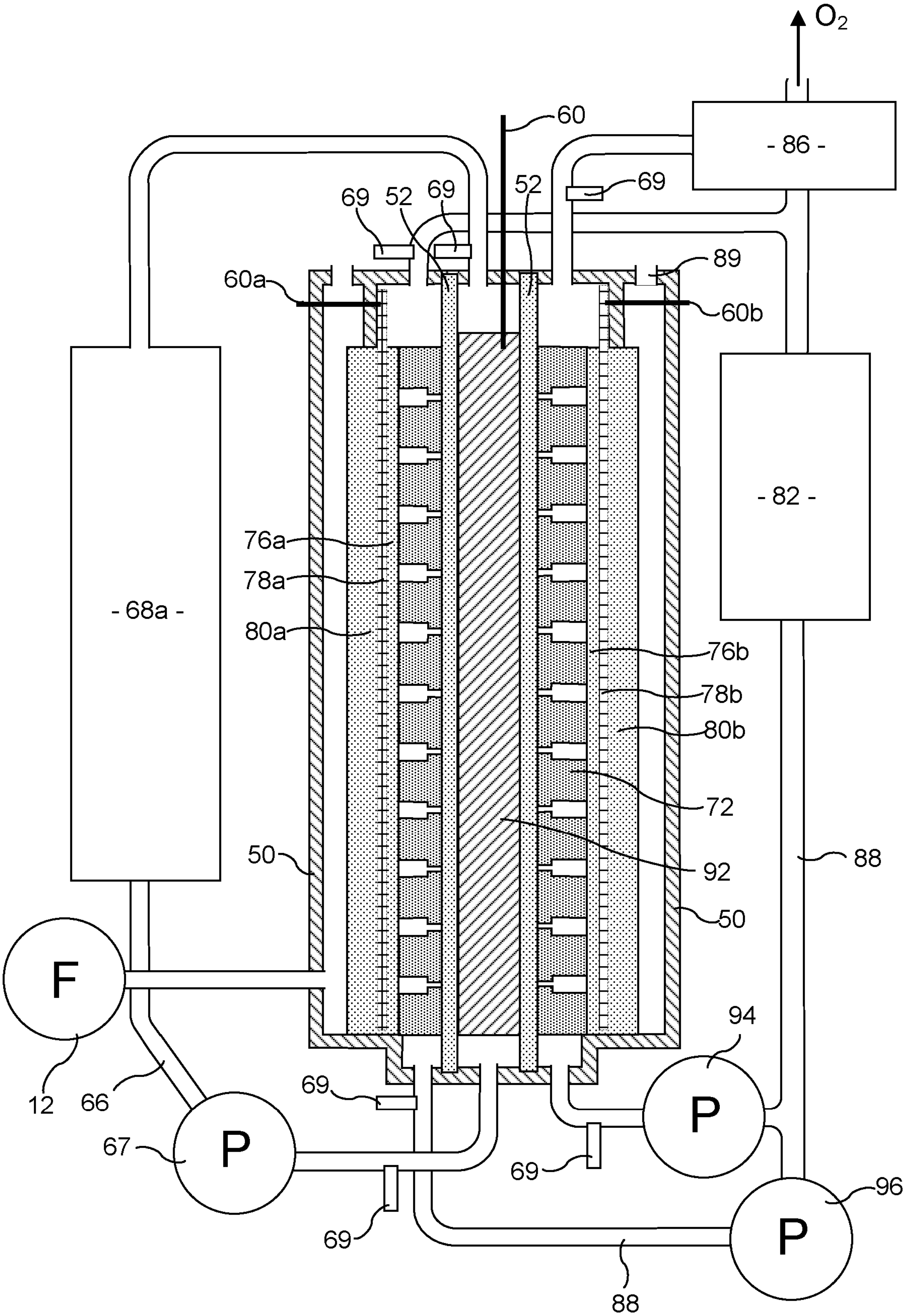

O2
- 86 -
60
69
52
69
52
69
89
60a
60b
- 82 -
- 68a -
76a
78a
80a
76b
78b
80b
72
92
88
50
50
F
12
66
67
P
69
69
94
P
69
96
P
69
88


Fig 13

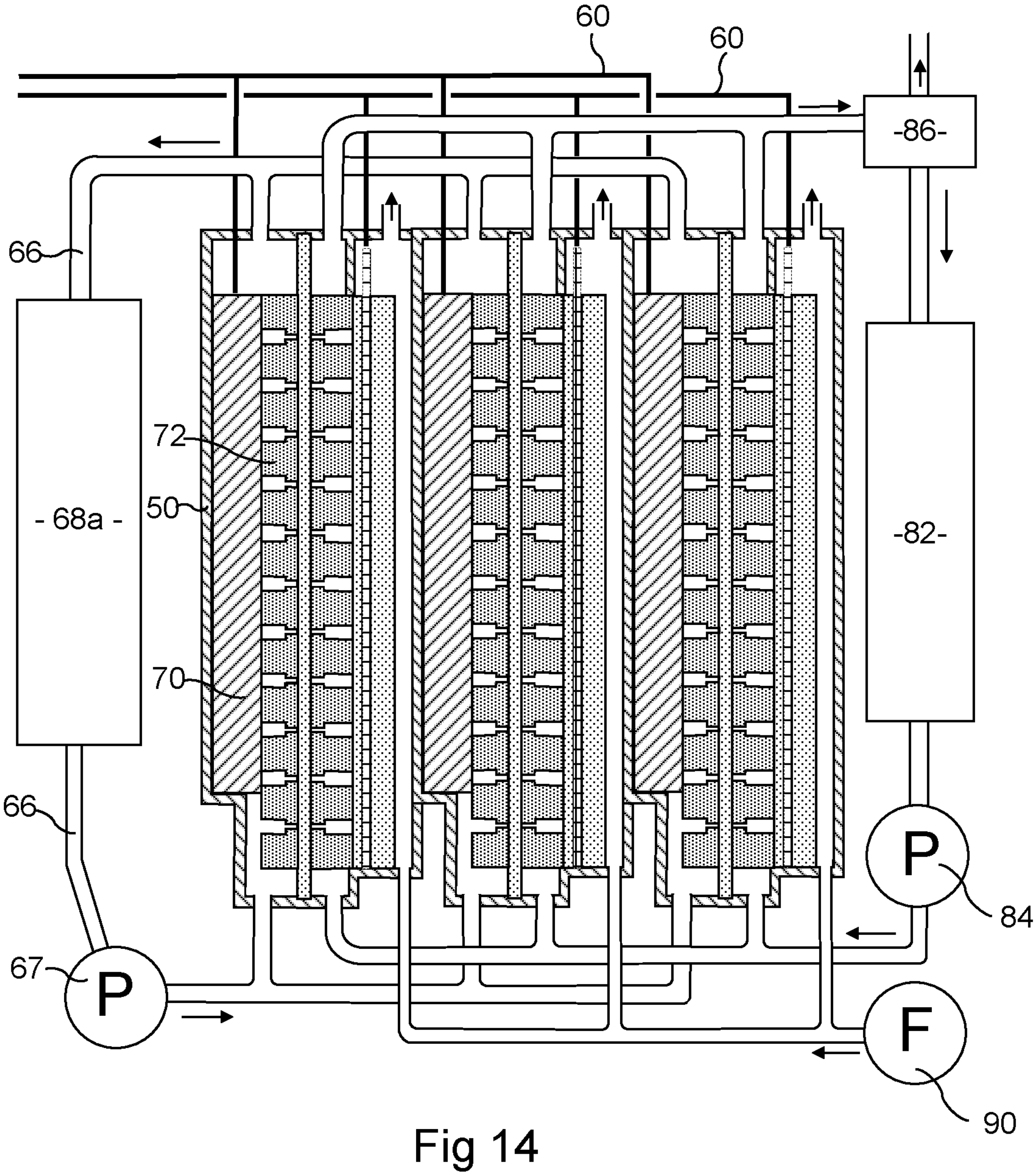


Fig 14

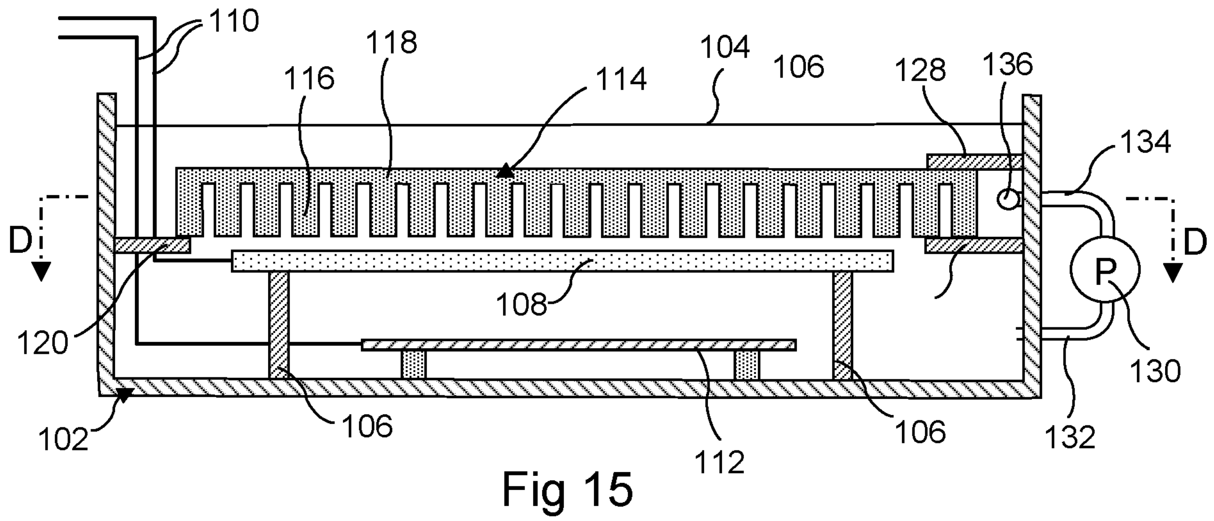
110
118
116
114
104
106
128
136
134
D
D
P
120
108
130
102
106
112
106
132

Fig 15

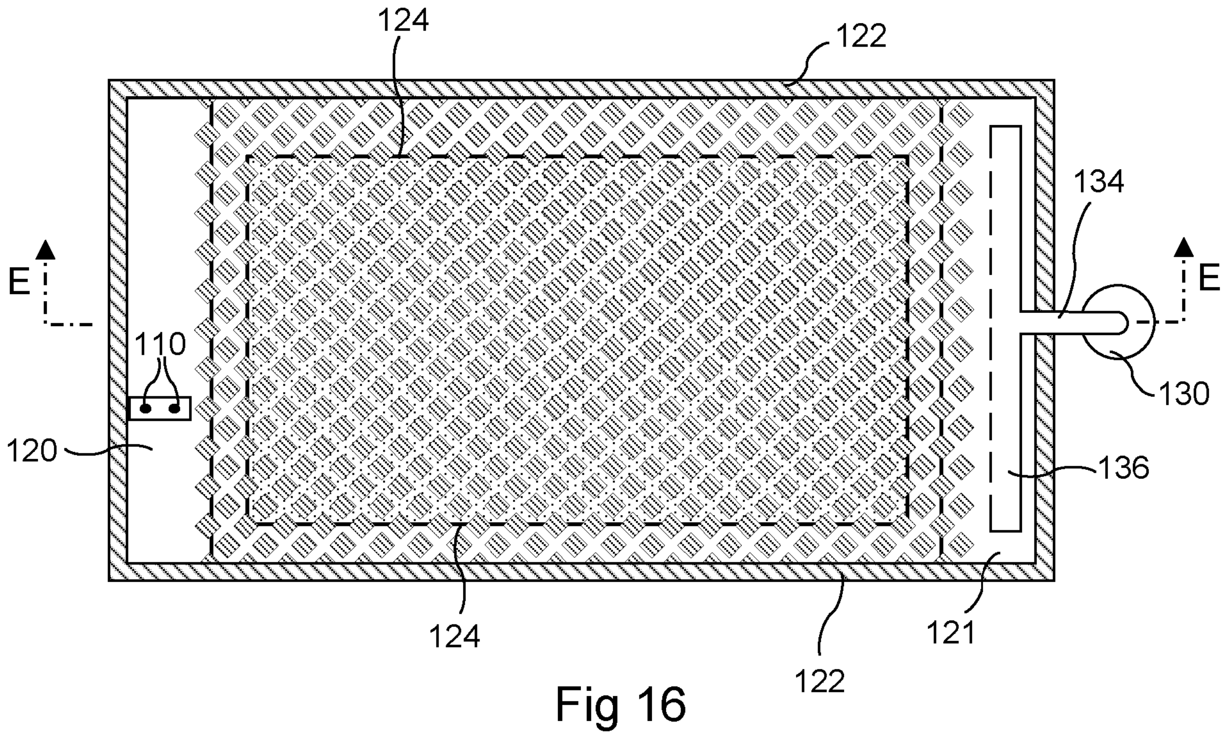
124
122
134
E
E
110
130
120
136
124
122
121

Fig 16

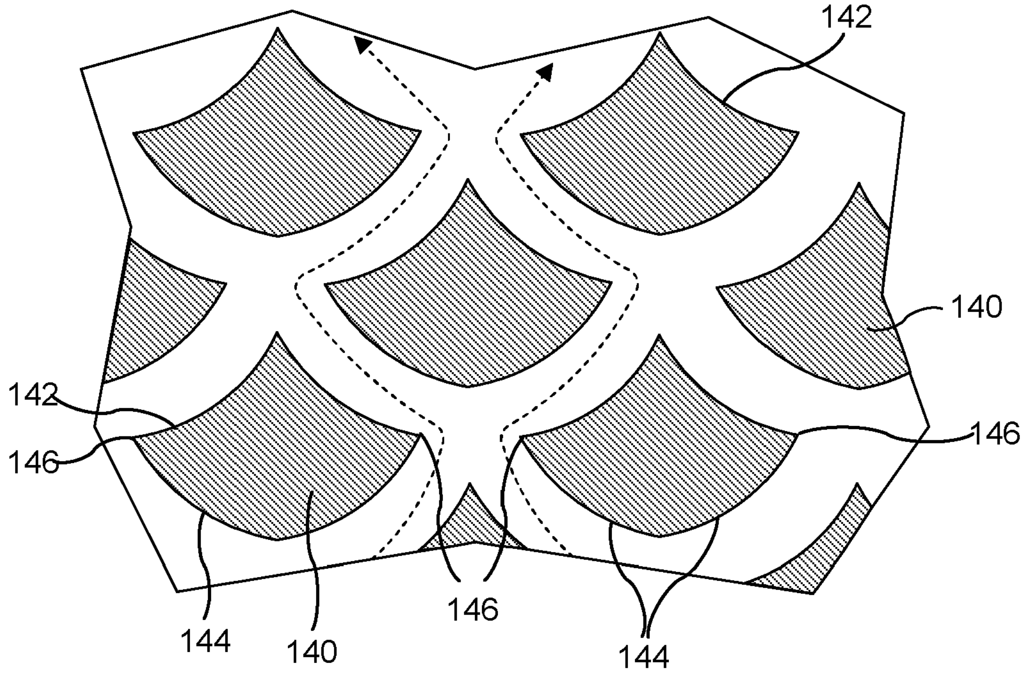
142
140
142
146
146
146
144
140
146
144

Fig 17

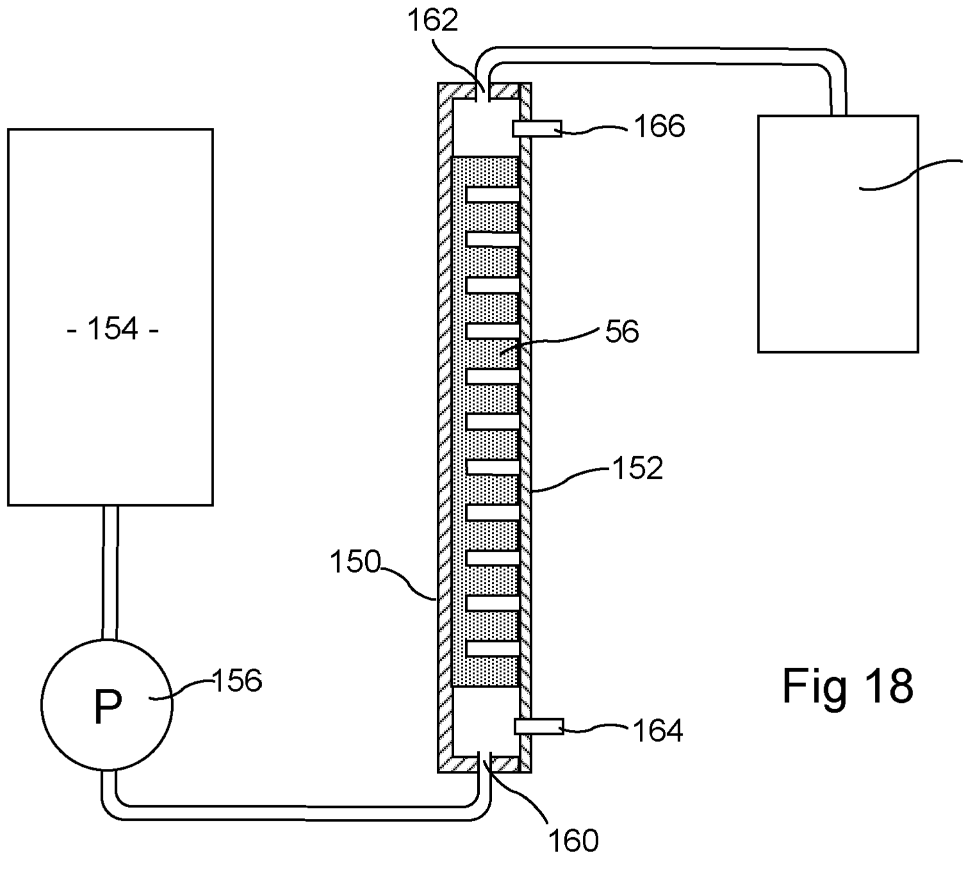
162
166
158
- 154 -
56
152
150
P
156
164
160

Fig 18

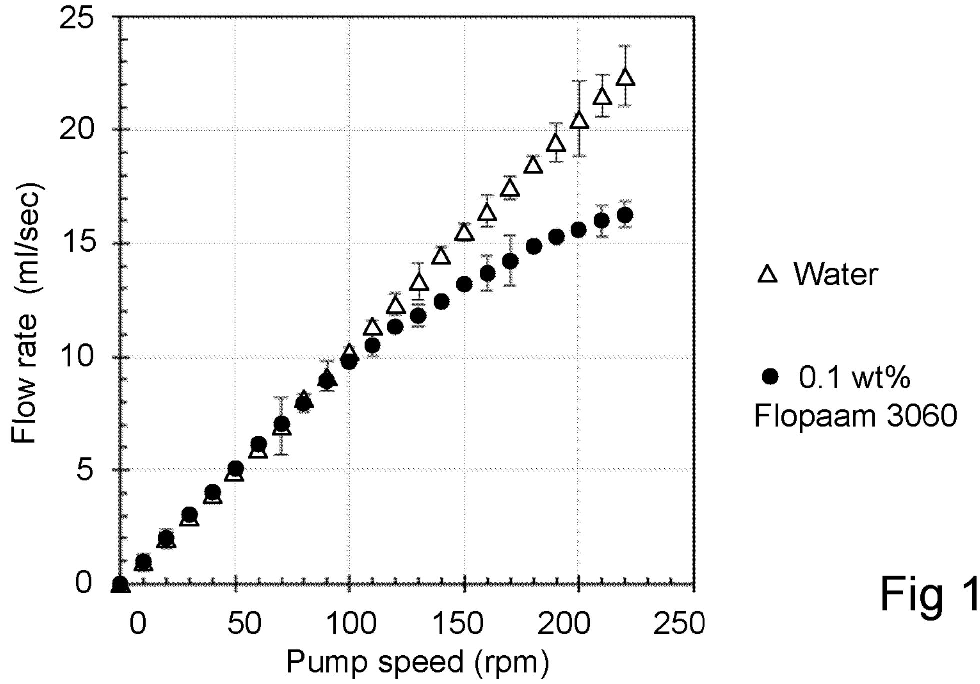
25
20
15
10
5
0
0
50
100
150
200
250
Flow rate (ml/sec)
Pump speed (rpm)
Water
0.1 wt%
Flopaam 3060

Fig 19

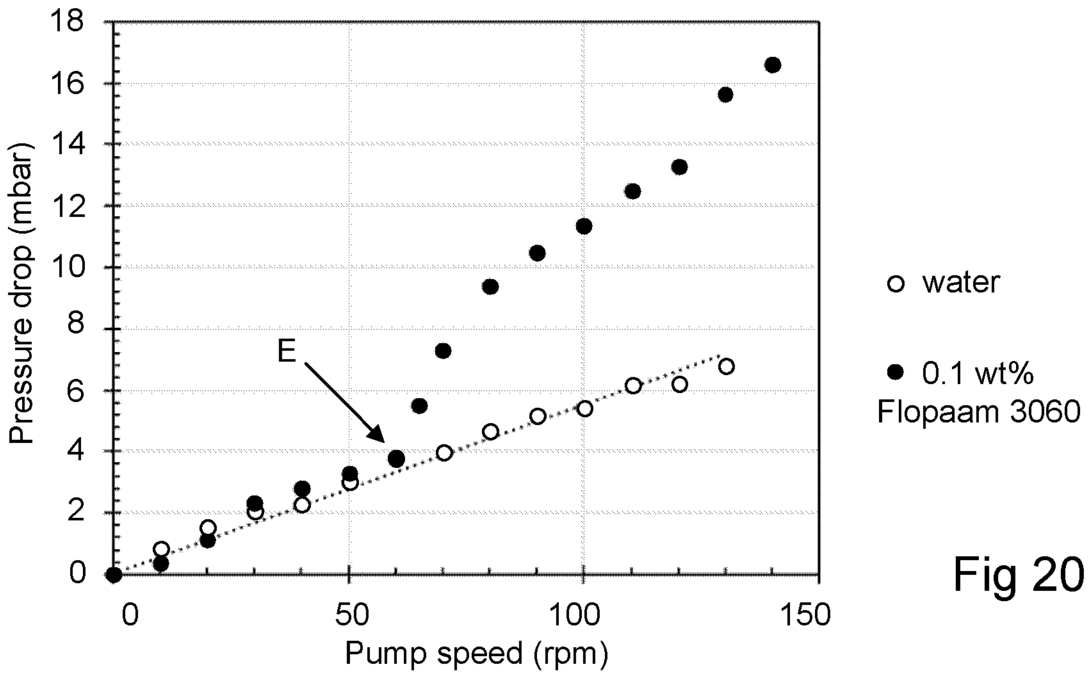
18
16
14
12
10
8
6
4
2
0
0
50
100
150
Pressure drop (mbar)
Pump speed (rpm)
E
water
0.1 wt%
Flopaam 3060

Fig 20

Europäisches Patentamt
European Patent Office
Office européen des brevets

# EUROPEAN SEARCH REPORT

Application Number
EP 25 20 2121

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P<br>A,P | WO 2025/059260 A1 (SCHLUMBERGER TECHNOLOGY CORP [US]; SCHLUMBERGER CA LTD [CA] ET AL.) 20 March 2025 (2025-03-20)<br>* claims 1, 3, 8, 11, 12, 14 *<br>----- | 1-3,5-8, 12,13,15<br>4,9,14 | INV.<br>H01M8/04186<br>H01M8/18<br>H01M12/08 |
| X,P | WO 2025/128835 A1 (SCHLUMBERGER TECHNOLOGY CORP [US]; SCHLUMBERGER CA LTD [CA] ET AL.) 19 June 2025 (2025-06-19)<br>* paragraphs [0054], [0100] - [0105]; claims 1, 7, 18, 23 *<br>----- | 1-3,5-8, 12,13,15 | |
| X,P | WO 2025/059273 A1 (SCHLUMBERGER TECHNOLOGY CORP [US]; SCHLUMBERGER CA LTD [CA] ET AL.) 20 March 2025 (2025-03-20)<br>* paragraphs [0010], [0076] - [0079]; claims 1, 12, 23 *<br>----- | 1-3,5-8, 12,13,15 | |
| A | US 2013/029187 A1 (COOPER JOHN F [US] ET AL) 31 January 2013 (2013-01-31)<br>* claims 1, 13 *<br>----- | 1-15 | TECHNICAL FIELDS SEARCHED (IPC)<br>H01M |

The present search report has been drawn up for all claims

2

| Place of search | Date of completion of the search | Examiner |
|---|---|---|
| Munich | 11 February 2026 | Koessler, Jean-Luc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 20 2121

This annex lists the patent family members relating to the patent documents cited in the above-mentioned European search report.
The members are as contained in the European Patent Office EDP file on
The European Patent Office is in no way liable for these particulars which are merely given for the purpose of information.

11-02-2026

| Patent document cited in search report | Publication date | Patent family member(s) | Publication date |
|---|---|---|---|
| WO 2025059260 A1 | 20-03-2025 | GB 2633597 A | 19-03-2025 |
| | | US 2025096288 A1 | 20-03-2025 |
| | | WO 2025059260 A1 | 20-03-2025 |
| WO 2025128835 A1 | 19-06-2025 | GB 2636461 A | 18-06-2025 |
| | | US 2025198711 A1 | 19-06-2025 |
| | | WO 2025128835 A1 | 19-06-2025 |
| WO 2025059273 A1 | 20-03-2025 | GB 2633598 A | 19-03-2025 |
| | | US 2025092298 A1 | 20-03-2025 |
| | | WO 2025059273 A1 | 20-03-2025 |
| US 2013029187 A1 | 31-01-2013 | CN 102823046 A | 12-12-2012 |
| | | CN 106159189 A | 23-11-2016 |
| | | EP 2553752 A2 | 06-02-2013 |
| | | US 2011244277 A1 | 06-10-2011 |
| | | US 2013029187 A1 | 31-01-2013 |
| | | US 2014363707 A1 | 11-12-2014 |
| | | US 2018277864 A1 | 27-09-2018 |
| | | WO 2011126908 A2 | 13-10-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **STEINBERG**. *Annual Review of Fluid Mechanics*, 2021, vol. 53, 27-58
- **RUBINSTEIN** ; **COLBY** ; **2003**. Polymer Physics. Oxford University Press
- **GROISMAN** ; **STEINBERG**. Elastic Turbulence in a polymer solution flow. *Nature*, 2000, vol. 45, 53
- **DRIS** ; **SHAQFEH**. *J. Non-Newtonian Fluid Mech*, 1998, vol. 80, 1-58
- **MAGDA** ; **LARSON**. *J. Non-Newtonian Fluid Mech.*, 1988, vol. 30, 1-19
- **DAVOODI et al.** *J. Liquid Mech.*, 2018, vol. 857, 823-850
- Chain Dimensions and Entanglement Spacings. **FETTERS** ; **LOHSE** ; **COLBY**. Physical Properties of Polymers Handbook. Springer, 2007, 447-454
- **YANG**. Viscoelastic wormlike micelles and their applications. *Current Opinion in Colloid & Interface Science*, 2002, vol. 7
- **RAGHAVAN** ; **KALER**. Highly Viscoelastic Wormlike Micellar Solutions Formed by Cationic Surfactants with Long Unsaturated Tails. *Langmuir*, 2001, vol. 17, 300-306
- **BEAUMONT et al.** Turbulent flows in highly elastic wormlike micelles. *Soft Matter*, 2013, vol. 9, 735
- **FARDIN et al.** Elastic Turbulence in Shear Banding Wormlike Micelles. *Physical Review Letters*, 2010, vol. 104, 178303
- **D.O. OLAGUNJU**. Instabilities and bifurcations of von Karman similarity solutions in swirling viscoelastic flow. *Z Angew Math Phys*, 1995, vol. 46, 224-238
- **E. TRAN** ; **A. CLARKE**. The relaxation time of entangled HPAM solutions in flow. *Journal of Non-Newtonian Fluid Mechanics*, 2023, vol. 311, 104954
- **MOSS GR** ; **ROTHSTEIN JP**. Flow of wormlike micelle solutions through a periodic array of cylinders. *Journal of Non-Newtonian Fluid Mechanics*, vol. 165, 1-13
- Systematic Study of Quaternary Ammonium Cations for Bromine Sequestering Application in High Energy Density Electrolytes for Hydrogen Bromine Redox Flow Batteries. *Molecules*, 2021, vol. 26, 2721
- **LEUNG et al.** Characterization of a zinc-cerium flow battery. *Journal of Power Sources*, 2011, vol. 196, 5174
- **MAHMOOD et al.** A Newly Designed Fixed Bed Redox Flow Battery Based on Zinc/Nickel System. *J. Electrochem. Sci. Technol.*, 2017, vol. 8 (3), 236-243
- **HRUSKA** ; **SAVINELL**. Investigation of factors affecting performance of the iron-redox battery. *J. Electrochem. Soc.*, 1981, vol. 128, 18
- **ZHOU et al.** A Sn-Fe flow battery with excellent rate and cycle performance. *J. Power Sources*, 2018, vol. 404, 89
- **XIE et al.** A highly reversible neutral zinc/manganese battery for stationary energy storage. *Energy and Environmental Science*, 2020, vol. 13, 135
- **HAZZA et al.** A novel flow battery: A lead acid battery based on an electrolyte with soluble lead(II). Part I. Preliminary studies. *Phys.Chem.Chem.Phys.*, 2004, vol. 6, 1773
- **NAZIR et al.** A Review of Rechargeable Zinc-Air Batteries: Recent Progress and Future Perspectives. *Nano-Micro Letters*, vol. 16, 138